# EUROPEAN PATENT SPECIFICATION

(11) **EP 0 735 244 B1**
(45) Date of publication and mention of the grant of the patent: **23.12.1998**
(21) Application number: 96104895.6
(22) Date of filing: 27.03.1996
(51) Int. Cl.: F01L 1/26, F01L 1/053, F02F 1/42

(54) **Direct injection type diesel engine**
Dieselbrennkraftmaschine der Direkteinspritzungsart
Moteur diesel à injection directe

(30) Priority: 27.03.1995 JP 67906/95
(43) Date of publication of application: 02.10.1996
(73) Proprietor: MAZDA MOTOR CORPORATION, Aki-gun, Hiroshima 730-91 (JP)
(72) Inventor: Nakai, Eiji, Hiroshima-shi, Hiroshima (JP); Oda, Yoshiharu, Nishi-ku, Hiroshima-shi, Hiroshima (JP); Tamamoto, Kazuyoshi, Hiroshima-shi, Hiroshima (JP); Tachikawa, Koji, Asakita-ku, Hiroshima-shi, Hiroshima (JP)
(74) Representative: Müller-Boré & Partner Patentanwälte

(56) References cited:
- EP-A- 0 504 128
- EP-A- 0 586 884
- DE-A- 4 011 292
- FR-A- 2 149 881
- FR-A- 2 464 364

## Description

### Field of the Invention

The invention of the present application relates to a direct injection type diesel engine.

### Description of the Prior Art

In the diesel engine, recently, various measures have been attempted to solve the contradictory problem of enhancement of engine output and improvement of exhaust emission. For example, in the fuel feed system, the vortex chamber type diesel engine which was conventionally in the mainstream in the engine of a relative small type such as passenger car engine tends to be used in the direct injection type diesel engine in which the fuel is directly injected into the combustion chamber. In the intake and exhaust system, the operating valve tends to be used as multiple valves (for example, two intake valves, two exhaust valves). In such multiple-valve diesel engine, for example, in a diesel engine comprising two intake valves and two exhaust valves in each cylinder so that these operating valves are driven through each corresponding rocker arm by one cam shaft, generally, the rocker arm system or the so-called double rocker arm system is employed, in which, in each cylinder, two intake valves are driven by one intake rocker arm, and two exhaust valves are driven by one exhaust rocker arm (for example, Japanese Laid-open Patent 64-12009).

On the other hand, regarding the layout and construction of the head bolts for tightening the cylinder block and cylinder head, in the large-sized diesel engine generally employing the direct injection type fuel injection mechanism, it is common to employ the so-called six-bolt structure, that is, the head bolt configuration of disposing six head bolts around each cylinder, in order to maintain the high sealing performance in the cylinder bore having a large bore size which is relatively hard to seal. In the small-sized diesel engine with a relatively small bore size, it is general to employ the so-called four-bolt structure, that is, the head bolt configuration of disposing four head bolts around each cylinder (for example, the same Japanese Laid-open Patent 64-12009). In the diesel engine of four-bolt structure of head bolt configuration, as disclosed in Japanese Laid-open Patent 64-12009, it is common to dispose the cam bearing for rotatably supporting the cam shaft at a position between adjacent cylinder bores (this position is called the inter-cylinder bore position), as seen in the longitudinal direction (front-rear direction) of the engine, that is, in the extending direction of the axial line of the cam shaft.

However, the following problems are caused in the conventional diesel engine such as the one disclosed in Japanese Laid-open Patent 64-12009, in which two intake valves are driven by one intake rocker arm and two exhaust valves are driven by one exhaust rocker arm, in each cylinder, and the cam bearing is disposed at the inter-cylinder bore position same as the head bolts.

First, since the cam bearing is located at the inter-cylinder bore position, in particular, in the cam bearing located at the engine front end, that is, in the cam bearing cantilevering the front end of the cam shaft mounting a transmission member such as drive pulley which is driven by an engine output shaft and receives tensile force from the engine output shaft side, in addition to the tensile force from the engine output shaft side, a large reaction induced at the cam shaft side by the intake rocker arm and exhaust rocker arm corresponding to the cylinder bore located at the foremost position is applied to the cam bearing. It leads to the problem of lowering of reliability of the cam bearing. To solve this problem, it is necessary to extend the cam shaft diameter or extend the cam bearing width, but it leads to another problem of difficulty of compact design in the longitudinal direction of the engine.

Second, since the cam bearing is located at the inter-cylinder bore position same as the head bolts, when setting the position for disposing the cam bearing, in order to avoid interference with the head bolts, it is required to set the cam bearing to the outer side of the position of the head bolts, as seen in a direction vertical to the longitudinal direction (front-rear direction) of the engine in a plane view, that is, in the engine width direction. Accordingly, the cam shaft is located at a position very far from the cylinder bore as seen in the engine width direction, which is contrary to the compact design in the engine width direction.

Moreover, in the conventional direct injection type diesel engine, a stress is provoked on the water jacket wall around the valve operating mechanism by tightening of the head bolts, which led to a problem of lowering of durability of the wall.

### Summary of the Invention

The invention is devised to solve the problems of the prior art, and it is hence a primary object thereof to present a direct injection type diesel engine promoted in compact design and enhanced in the reliability of the cam bearing by properly planning the layout of members around the valve operating mechanism. It is a further object to present a direct injection type diesel engine sufficiently heightened in the durability of the water jacket wall around the valve operating mechanism.

These objects are achieved by a direct injection type diesel engine having the features disclosed in claim 1.

Preferred embodiments are defined in the subclaims.

A first aspect of the invention devised to solve the problems relates to a direct injection type diesel engine having two intake valves and two exhaust valves provided in each cylinder, with the two intake valves disposed zigzag so that the intake valve center line which is a straight line passing through the center of both intake valves in a plane view and the cylinder bore center line which is a straight line passing through the center of each cylinder bore may intersect at a specific inclined angle, and with the two exhaust valves disposed zigzag so that the exhaust valve center line which is a straight line passing through the center of both exhaust valves in a plane view and the cylinder bore center line may intersect at a specific inclined angle, wherein a pair of head bolt holes are provided only at positions away from the cylinder bore as seen in an extending direction of the cylinder bore center line, on both sides of the cylinder bore line, so that four head bolt holes are disposed around each cylinder bore, one cam shaft which is extended in the extending direction of the cylinder bore and is rotated and driven by an engine output shaft is disposed ahead of one peripheral edge of the cylinder bore as seen in the direction vertical to the cylinder bore center line in a plane view, a cam bearing for rotatably supporting the cam shaft is disposed at a position corresponding to the cylinder bore center as seen in the extending direction of the cylinder bore center line, and the two intake valves are opened or closed by an intake rocker arm which is oscillated and driven by an intake cam provided on the cam shaft, and the two exhaust valves are opened or closed by an exhaust rocker arm which is oscillated and driven by an exhaust cam provided on the cam shaft.

Herein, "positions away from the cylinder bore" include a slightly front side position from cylinder bore located at the foremost position, the inter-cylinder bore position, and a slightly rear position from the cylinder located at the rearmost position. The "direction vertical to the cylinder bore center line in a plane view" means the engine width direction.

In the direct injection type diesel engine of the first aspect, basically, the cam bearing is located at a position corresponding to the cylinder bore center (hereinafter this position is called the bore center corresponding position) as seen in the extending direction of the cylinder bore center line, that is, in the engine longitudinal direction (front-rear direction), while the head bolt holes are located at positions away from the cylinder bore. Therefore, the cam bearing and the head bolts screwed into the head bolt holes will not interfere with each other in the layout. Hence, the cam shaft can be installed closer to the cylinder bore center as seen in the engine width direction, so that the engine width direction may be compact.

Moreover, in the direct injection type diesel engine of the first aspect, the intake rocker arm comprises an abutting part for abutting against the intake cam, and a pushing part located at an intermediate position of both centers of the two intake valves in a plane view for pushing the two intake valves at a same timing, and the exhaust rocker arm comprises an abutting part for abutting against the exhaust cam, and a pushing part located at an intermediate position of both centers of the two exhaust valves in a plane view for pushing the two exhaust valves at a same timing, and in at least one of the two rocker arms, it is preferred that the pushing part may be deviated to the cylinder bore center side with respect to the abutting part, as seen in an extending direction of the cylinder bore center line. More specifically, only in the intake rocker arm, the pushing part may be deviated from the abutting part. Or, in both intake rocker arm and exhausts rocker arm, individually, the pushing part may be deviated to the cylinder bore center side with respect to the abutting part, and in this case the deviation extent of the intake rocker arm is preferred to be larger than the deviation extent of the exhaust rocker arm.

Generally, in the direct injection type diesel engine basically constituted by disposing two intake valves and two exhaust valves in each cylinder bore, opening and closing the both intake valves by a cam shaft through one intake rocker arm, and opening and closing the both exhaust valves by the cam shaft through one exhaust rocker arm, when the both intake valves and both exhaust valves are disposed zigzag, as compared with the case in which the both intake valves and both exhaust valves are disposed parallel in a direction orthogonal to the axial line of the cam shaft, the pushing part of the intake rocker arm corresponding to the intermediate position of the both centers of the both intake valves, and the pushing part of the exhaust rocker arm corresponding to the intermediate position of the both enters of the both exhaust valves are deviated to the cylinder bore center side as seen in the engine longitudinal direction. Therefore, in the case of each roller arm in a shape extending in a direction vertical to the axial line direction of the cam shaft in a plane view, that is, in the case of the straight line linking the abutting part and abutting part in a shape extending in a direction vertical to the axial line direction of the cam shaft, the abutting parts of the both rocker arms come closer to each other in the axial line direction of the cam shaft, and it is difficult to dispose the cam bearing in the position between them, that is, in the bore center corresponding position. In spite of this difficult, if attempting to place the cam bearing at this bore center corresponding position, in the case of six-bolt configuration, the cam bearing must be departed very far in the opposite direction of the cylinder bore center side as seen in the engine width direction.

However, according to the direct injection type diesel engine of the invention, at least in one of the intake rocker arm and exhaust rocker arm, since the pushing part is deviated to the bore center side in the axial line direction of the cam shaft as compared with the abutting part, if the interval of the pushing parts of the both rocker arms is narrow, the interval of the abutting parts is wide. Hence, it is extremely easy to place the cam bearing between the abutting parts, that is, in the bore center corresponding position.

As stated above, moreover, when the cam bearing is placed at the inter-cylinder bore position, a mutual interference of the cam bearing and head bolt holes occurs, but in the direct injection type diesel engine of the invention, the head bolt holes are located at positions away from the cylinder bore as seen in the axial line direction of the cam shaft, that is, only slightly ahead of the foremost cylinder bore, the inter-cylinder bore position, and slightly behind the rearmost cylinder bore, and therefore there is no head bolt hole at a position corresponding to the cylinder bore center as seen in the axial line direction of the cam shaft. Therefore, it is possible to dispose the cam bearing as close to the cylinder bore as possible in the engine width direction, in order words, to dispose the cam bearing as close to the cylinder bore center side as possible.

That is, according to the direct injection type diesel engine of the invention, by disposing the two intake valves and two exhaust valves zigzag, the pushing part of the intake rocker arm and the pushing part of the exhaust rocker arm are both close to the cylinder bore center as seen in the engine longitudinal direction, but since the pushing parts of the rocker arms are deviated to the cylinder bore center side with respect to the abutting part, the abutting part of the intake rocker arm and the abutting part of the exhaust rocker arm are disposed at positions relatively away from the bore center corresponding position, so that the cam bearing may be easily disposed at the bore center corresponding position. Thus, by disposing the cam bearing at the bore center corresponding position, the cam can be brought closer to the cylinder bore center side as far as possible, and hence the dimension in the engine width direction may be minimized, and the engine may be designed compact in the engine width direction.

In each direct injection type diesel engine of the first embodiment of the invention or its modified example, the rocker shaft for oscillatably supporting the intake rocker arm and exhaust rocker arm is disposed extending to be parallel to the cam shaft at a position closes to the cylinder bore center side than the cam shaft as seen in a direction vertical to the extending direction of the cylinder bore center line in a plane view, and the cam shaft is preferred to be disposed at a position lower than the rocker shaft. In this case, the cam shaft is located at the lower side of the intake rocker arm or exhaust rocker arm. That is, the intake cam or exhaust cam provided on the cam shaft respectively abuts against the lower side of the intake rocker arm or exhaust rocker arm. Thus, the height of the engine is suppressed, and the engine is designed compact in its vertical direction.

In each direct injection type diesel engine of the first embodiment of the invention or its modified example, the cam bearing is preferred to have a cam cap tightened and fixed to the cylinder head. Thus, it is easier to mount or dismount the cam shaft in the cylinder head.

In each direct injection type diesel engine of the first embodiment of the invention or its modified example, the arm length of either rocker arm small in deviation extent of the pushing part to the abutting part, of the intake rocker arm and exhaust rocker arm, is preferred to be shorter than the arm length of the other rocker arm. Thus, the rocker arm large in deviation extent of the pushing part to the abutting part is longer in the arm length, and the inclination of the rocker arm in a direction vertical to the cylinder bore center line in a plane view or the bending of the rocker arm is prevented from being excessive, so that the strength or durability of the rocker arm may be enhanced.

Further, in each direct injection type diesel engine of the first embodiment of the invention or its modified example, the diameter of the intake valve is set larger than the diameter of the exhaust valve, and the lever ratio of the intake rocker arm is preferred to be set larger than the lever ratio of the exhaust rocker arm. In this case, the arm length of the intake rocker arm is preferred to be longer than the arm length of the exhaust rocker arm. Thus, the passage sectional area of the intake port opened and closed by the intake valve is larger, the air flow supplied into the combustion chamber increases, so that the engine output may be enhanced.

A second aspect of the invention relates to a direct injection type diesel engine having two intake valves and two exhaust valves provided in each cylinder, with the two intake valves disposed zigzag so that the intake valve center line which is a straight line passing through the center of both intake valves in a plane view and the cylinder bore center line which is a straight line passing through the center of each cylinder bore may intersect at a specific inclined angle, and with the two exhaust valves disposed zigzag so that the exhaust valve center line which is a straight line passing through the center of both exhaust valves in a plane view and the cylinder bore center line may intersect at a specific inclined angle, wherein one cam shaft extending in an extending direction of the cylinder bore center line is disposed, ahead of one peripheral edge of the cylinder bore as seen in a direction vertical to the cylinder bore center line in a plane view, a transmitter driven and coupled with an engine output shaft through a winding transmitting member is disposed at the front end of the cam shaft, a cam bearing rotatably supporting the cam shaft is disposed at a position corresponding to the cylinder bore center as seen in the extending direction of the cylinder bore center line, the two intake valves are opened or closed by an intake rocker arm which is oscillated and driven by an intake cam provided on the cam shaft, and the two exhaust valves are opened or closed by an exhaust rocker arm which is oscillated and driven by an exhaust cam provided on the cam shaft, a rocker shaft for oscillatably supporting the intake rocker arm and exhaust rocker arm is extended and disposed parallel to the cam shaft, at a position closer to the cylinder bore center than the cam shaft as seen in a direction vertical to the extending direction of the cylinder bore center line in a plane view, and the lever ratio of the rocker arm located at the front side of either intake rocker arm or exhaust rocker arm corresponding to the cylinder bore located at the foremost position is set smaller than the lever ratio of the rocker arm located at the rear side.

Generally, in a direct injection type diesel engine having a basic construction in which two intake valves and two exhaust valves are provided in each cylinder, both intake valves are opened and closed by a cam shaft through one intake rocker arm, both exhaust valves are opened and closed by the cam shaft through one exhaust rocker arm, and a transmitter driven and coupled by an engine output is provided at the front end portion of the cam shaft through a winding transmitting member, the following features are known. First, between the intake rocker arm and exhaust rocker arm, as seen in a direction vertical to the axial line direction of the cam shaft in a plane view, the lever ratio defined by the ratio of the length between the pushing point and oscillation fulcrum to the length between the abutting point and oscillation fulcrum is different. Herein, the pushing point of the intake rocker arm is located at an intermediate position of both centers of the both intake valves in a plane view, and the pushing point of the exhaust rocker arm is located at an intermediate position of both centers of the both exhaust valves. Second, since the transmitter driven and coupled by the engine output shaft through winding transmitting member is disposed at the front end of the cam shaft, a tensile force acts on the cam bearing located at the engine front end through the transmitter, and the load condition of the cam bearing is severer than that of the other cam bearings.

Thus, in the direct injection type diesel engine of the second aspect of the invention, basically, the cam bearing is located at the bore center corresponding position, and of the intake rocker arm and exhaust rocker arm corresponding to the cylinder bore located at the foremost position, the lever ratio of the rocker arm located at the front side is set smaller than the lever ratio of the rocker arm located at the rear side. In this constitution, the rocker arm located at the front side in the cylinder bore located at the foremost position is located at the front side rather than the cam bearing located at the bore center corresponding position to the same cylinder bore, and therefore the load on the basis of the reaction force of the rocker arm acts on the cam bearing positioned at the engine front end. However, the rocker arm located at the rear side in the cylinder bore is positioned behind the cam bearing disposed at the bore center corresponding position to the cylinder bore, and the load on the basis of the reaction force of the rocker arm does not act on the cam bearing positioned at the engine front end. Moreover, the lever ratio of the rocker arm positioned at the front side is relatively small (at least smaller than the lever ratio of the rocker arm positioned at the rear side), so that the load on the basis of the reaction force of the rocker arm positioned at the front side is relatively small. Still more, the load on the basis of the reaction force of the rocker arm positioned at the front side is distributed and received by the cam bearing positioned at the engine front end and the second cam bearing from the front side. Accordingly, the load acting on the cam bearing positioned at the engine front side on the basis of the reaction force of the rocker arm positioned at the front side is very small.

That is, the total load applied on the cam bearing positioned at the engine front end is only the load from the transmitter side and part of the load (distributed portion) on the basis of the rocker arm smaller in the lever ratio of the two rocker arms corresponding to the cylinder bore positioned at the foremost side. By contrast, in the conventional direct injection diesel engine having the cam bearing located at the inter-cylinder bore position, for example, the cam bearing positioned at the engine front end is subject to the load from the transmitter, and part of the load (the distributed portion in the second cam bearing from the front side) on the basis of the reaction force of both rocker arms corresponding to the cylinder bore positioned at the foremost side. Therefore, in the direct injection type diesel engine of the invention, as compared with the conventional direct injection type diesel engine, the load acting on the cam bearing positioned at the engine front end is smaller, and hence the reliability of the cam bearing positioned at the engine front end is improved accordingly, and the diameter and width of the cam bearing can be reduced, thereby making the cam bearing compact and hence making the diesel engine compact.

A third aspect of the invention relates to a direct injection type diesel engine of the first aspect, wherein the intake rocker arm comprises an abutting part abutting against the intake cam, and a pushing part located at an intermediate position of both centers of two intake valves in a plane view for pushing the two intake valves at a same timing, and the exhaust rocker arm comprises an abutting part abutting against the exhaust cam, and a pushing part located at an intermediate position of both centers of two exhaust valves in a plane view for pushing the two exhaust valves at a same timing, and the pushing part is deviated to the cylinder bore center side with respect to the abutting part as seen in the extending direction of the cylinder bore center line, in at least one of the both rocker arms, a rocker shaft for oscillatably supporting the intake rocker arm and exhaust rocker arm is extended and disposed parallel to the cam shaft, at a position closer to the cylinder bore center than the cam shaft as seen in a direction vertical to the extending direction of the cylinder bore center line in a plane view, the cam bearing has a cam cap tightened and fixed to the cylinder head, and the lever ratio of the rocker arm located at the front side of either intake rocker arm or exhaust rocker arm corresponding to the cylinder bore located at the foremost position is set smaller than the lever ratio of the rocker arm located at the rear side.

The direct injection type diesel engine of the third aspect of the invention possesses the following characteristic actions and effects in addition to the actions and effects obtained in the direct injection type diesel engine of the first aspect. That is, is, basically, the cam bearing is located at the bore center corresponding position, and the lever ratio of the rocker arm located at the front side of the intake rocker arm and exhaust rocker arm corresponding to the cylinder bore positioned at the foremost side is set smaller than the lever ratio of the rocker arm located at the rear side, and therefore as compared with the conventional direct injection type diesel engine having the cam bearing disposed at the inter-cylinder bore position, the load applied to the cam bearing positioned at the engine front side is smaller, and hence the cam bearing positioned at the engine front side is made compact, thereby making the engine compact. Moreover, since the cam bearing is tightened and fixed to the cylinder head through the cam cap, mounting and dismounting of the cam shaft in the cylinder head may be easier. Same as in the modified example of the first aspect of the direct injection type diesel engine, since the pushing point is deviated to the cylinder bore center side with respect to the abutting point, it is easier to dispose the cam bearing at the bore center corresponding position.

In the direct injection type diesel engine of the second and third aspects of the invention, the lever ratio of the exhaust rocker arm is preferred to be set smaller than the lever ratio of the intake rocker arm. This provides the following characteristic actions and effects in addition to the actions and effects of the direct injection diesel engine of the second or third aspect. That is, in a general engine, to enhance the filling efficiency of intake, the diameter of the intake port is set larger than the diameter of the exhaust valve. As a result, the diameter of the intake valve is larger than the diameter of the exhaust valve, and the driving force of the operating valve is larger in the intake valve than in the exhaust valve. Therefore, by setting the lever ratio of the exhaust rocker arm corresponding to the exhaust valve smaller in the driving force of the operating valve, out of the exhaust rocker arm and intake rocker arm disposed in each cylinder, smaller than the lever ratio of the intake rocker arm larger in the driving force of operating valve, and locating this exhaust rocker arm at the front side of the cam bearing disposed at the bore center corresponding position, lessening of the load applied to the cam bearing positioned at the engine front side is further promoted. Thus, in the direct injection type diesel engine, in this constitution, the reliability of the cam bearing positioned at the engine front end is further enhanced, and the engine is made more compact.

In the direct injection type diesel engines of the invention, in the case of the cam bearing having a cam cap tightened and fixed to the cylinder head, the rocker shaft is integrally fixed by joint coupling together with the cam cap by the bolts for tightening the cam cap, and, preferably, the head bolt hole positioned at the cam shaft side from the cylinder bore center line out of the head bolt holes should be disposed at a position overlapping with the rocker shaft in a plane view.

This constitution brings about the following characteristics actions and effects. That is, according to this constitution, the rocker shaft can be brought closer to the bore center side regardless of presence of the head bolt hole. Besides, when the rocker shaft is mounted on the cylinder head by using other mounting member than the cam cap, the cam cap and the mounting member must be disposed at a mutual spacing in the engine width direction in order to avoid mutual interference. In the direct injection type diesel engine of the invention, however, since the rocker shaft is integrally fixed by joint coupling together with the cam cap by the bolts for tightening the cam cap, such problems do not occur, so that the rocker shaft and cam shaft can be brought more closely to the cylinder bore center side. By these synergistic effects, the compact design of engine in the width direction is further promoted.

In the direct injection type diesel engines of the invention, moreover, the front end portion of the rocker shaft is preferred to be inserted and fixed into the support part provided in the cam bearing positioned at the engine front end, in an extending direction of the cylinder bore center line.

This brings about the following characteristic actions and effects. That is, since the front end portion of the rocker shaft is inserted and fixed into the support part provided in the cam bearing positioned at the engine front end, in the axial line direction of the rocker shaft, the structure is simplified as compared with the case of, for example, fixing the front end portion of the rocker shaft on the cylinder head by bolt tightening or the like, and hence the mounting or dismounting efficiency of the rocker shaft may be improved. For example, in the case the head bolt is disposed near the front end of the rocker shaft, meanwhile, when the front end portion of the rocker shaft is tightened to the cylinder head by using bolts, to avoid interference of the bolts and head bolt, it is necessary to keep space for disposing the bolts by shifting the position of the cam bearing located at the engine front side to the forward side, which results in increase of the dimension of the engine in the longitudinal direction. However, as in the direct injection type diesel engine of the invention, by inserting and fixing the front end of the rocker shaft into the support part provided at the cam bearing positioned at the engine front end, such space for disposing the bolts is not necessary. Therefore, the cam bearing positioned at the engine front side can be brought closer to the cylinder pore located at the foremost side, so that the engine may be designed compact in the longitudinal direction.

A fourth aspect of the invention relates to a direct injection type diesel engine of the first aspect and its modified examples, wherein an opening to a combustion chamber of one intake port and an opening to a combustion chamber of one exhaust port are disposed on one diagonal line of a square having each center of four head bolt holes disposed around each cylinder bore as the peaks, and a rib projecting into a water jacket is provided in the bottom wall of the water jacket, between the exhaust port and the bolt boss of the head bolt hole confronting the exhaust port being positioned on the diagonal line. In this direct injection type diesel engine, the wall of the intake port is coupled with the upper wall of the water jacket at the, upstream side in the intake flow direction, it is preferred that a space may be formed between the wall of the exhaust port and the upper wall of the water jacket.

Generally, in the direct injection type diesel engine, at the intake port side, since the wall of the intake port is coupled with the upper wall of the water jacket at the upstream side in the intake flow direction, the rigidity of the water jacket wall around the intake port is relatively high. By contrast, at the exhaust side, since a space is formed between the wall of the exhaust port and the upper wall of the water jacket, the rigidity of the water jacket wall around the exhaust port is relatively low. Hence, in the direct injection type diesel engines of the invention, a rib is provided at the exhaust port side to raise the rigidity of the water jacket wall around the exhaust port, thereby enhancing the sealing performance of the cylinder bore at the exhaust port side.

On the other hand, at the intake port side, by the tightening force of head bolt, a tensile stress is induced on the water jacket wall around the intake port, and a crack may be formed in the water jacket wall around the intake port by this tensile force. Accordingly, at the intake port side, in order to alleviate such tensile stress, the rigidity of the water jacket wall around the intake port should not be raised so much. Hence, in the direct injection type diesel engine of the invention, no rib is provided at the intake port side. By contrast, at the exhaust port side, a compressive stress is induced on the water jacket wall around the exhaust port by the tightening force of head bolt. This compressive stress acts to suppress formation of crack, and therefore if a rib is provided at the exhaust port side, crack formation in the water jacket wall is not promoted.

In the direct injection type diesel engines of the invention, moreover, it is preferred to form a cross drill hole for feeding and discharging cooling water in the water jacket, extending from the exhaust side of the cylinder head inward of the cylinder head toward the intake port. It is more preferable to form such cross drill hole only at the exhaust side of the cylinder head. In this constitution, if there is no rib projecting into the water jacket between the intake port and the bolt boss of the head bolt hole confronting the intake port positioned on the diagonal line, the water jacket wall around the intake port is reinforced by the peripheral wall of the cross drill hole. If the cross drill hole is provided only at the exhaust side of the cylinder head, the cylinder block can be shared with the subsidiary chamber type (vortex chamber type) diesel engine.

A fifth aspect of the invention relates to a direct injection type diesel engine of the first aspect and its modified examples, wherein a fuel injection nozzle is disposed near the cylinder bore center in a plane view, and a nozzle holding member for fixing the fuel injection nozzle is disposed between the intake valve shaft and exhaust valve shaft at a position on the opposite side of the cam shaft relative to the fuel injection nozzle. In this direct injection type diesel engine, it is preferred to install an inlet piping for feeding fuel into the fuel injection nozzle above the nozzle holding member, and in this case it is further preferred that extending direction of the nozzle holder member and the extending direction of the inlet piping be deviated in a plane view. It is also preferred that the inlet piping be extended in a direction vertical to the extending direction of the cylinder bore center around the fuel injection nozzle.

In these direct injection type diesel engine, the nozzle holding member may be disposed easily. That is, the fuel injection nozzle is disposed near the cylinder bore center in a plane view, and the nozzle holding member is disposed at a position relatively closer to the fuel injection nozzle. Thus, in the direct injection type diesel engine of the invention, since the cam bearing is located at the bore center corresponding position, the layout is very difficult in the case of installing the nozzle holding member at the cam shaft side. In this way, however, since the nozzle holding member is disposed on the opposite side to the cam shaft, the layout of the nozzle holding member is extremely easy. Besides, when the inlet piping is disposed above the nozzle holding member, the nozzle holding member does not interfere with the inlet piping, and the layout of the nozzle holding member is much easier. When the extending direction of the nozzle holding member and the extending direction of the inlet piping are deviated, or when the inlet piping is extending in the width direction of the engine around the fuel injection nozzle, the layout of the nozzle holding member is much easier.

### Brief Description of the Drawings

These and other objects, features and advantages of the present invention will become clear from the following description taken in conjunction with the preferred embodiments with reference to the accompanying drawings throughout out which like parts are designated by like reference numerals, and in which :
Fig. 1 is a plan view of a direct injection diesel of the invention, with its head cover removed;
Fig. 2 is an essential sectional view along line II-II in Fig. 1;
Fig. 3 is a magnified sectional view along line III-III in Fig. 1;
Fig. 4 is an arrow view along line IV-IV in Fig. 3;
Fig. 5 is a plan view of an exhaust rocker arm;
Fig. 6 is a side view of the exhaust rocker arm shown in Fig. 5;
Fig. 7 is a sectional view along line VII-VII in Fig. 5;
Fig. 8 is a plan view of an intake rocker arm;
Fig. 9 is a side view of the intake rocker arm shown in Fig. 8;
Fig. 10 is a sectional view along line X-X in Fig. 8;
Fig. 11 is a plan sectional view of a cylinder head of the engine shown in Fig. 1;
Fig. 12 is an elevation sectional view around the fuel injection valve insertion hole of the cylinder head shown in Fig. 11;
Fig. 13 is an elevation sectional view around the cross drill hole of the cylinder head shown in Fig. 11;
Fig. 14 is an elevation sectional view around the exhaust port side water jacket of the cylinder head shown in Fig. 11;
Fig. 15 is an elevation sectional view around the intake port side water jacket of the cylinder head shown in Fig. 11;
Fig. 16 is a plan elevation view in the water jacket upper position near one cylinder of the cylinder head shown in Fig. 11;
Fig. 17 is a sectional view along line XVII-XVII in Fig. 16;
Fig. 18 is an elevation sectional view around the exhaust port of the cylinder head shown in Fig. 16;
Fig. 19 is a sectional view along line IXX-IXX in Fig. 16, emphasizing the deformed state due to axial force of the head bolt;

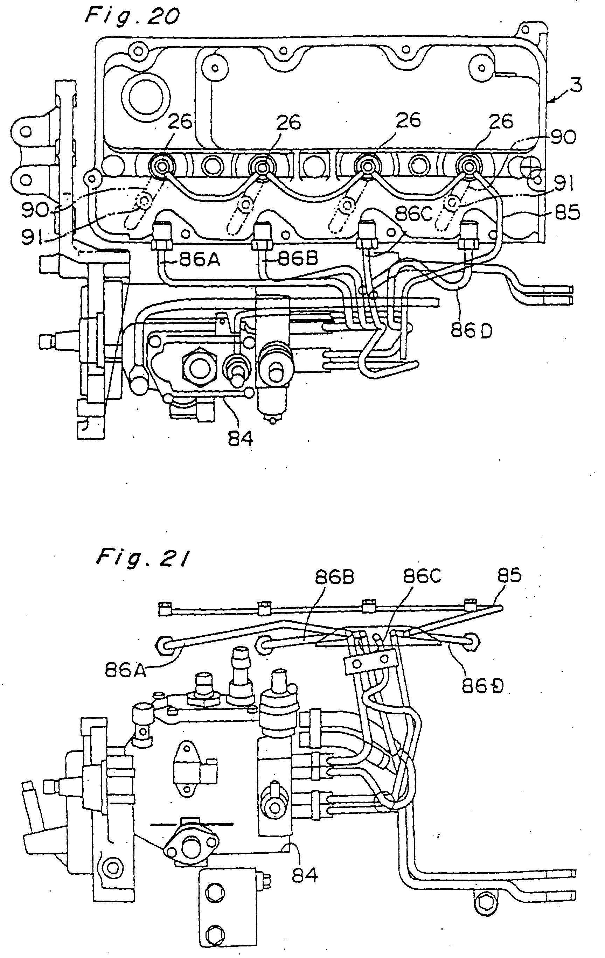

Fig. 20 is a plan view of a fuel feed system of the engine shown in Fig. 1;
Fig. 21 is a side view of the fuel feed system shown in Fig. 20;
Fig. 22 is a front view of the fuel feed system shown in Fig. 20; and
Fig. 23 is a partial sectional elevation view of fuel injection valve and nozzle holding member.

### Detailed Description of the Preferred Embodiment

The direct injection type diesel engine of the invention is specifically described below while referring to the accompanying drawings.

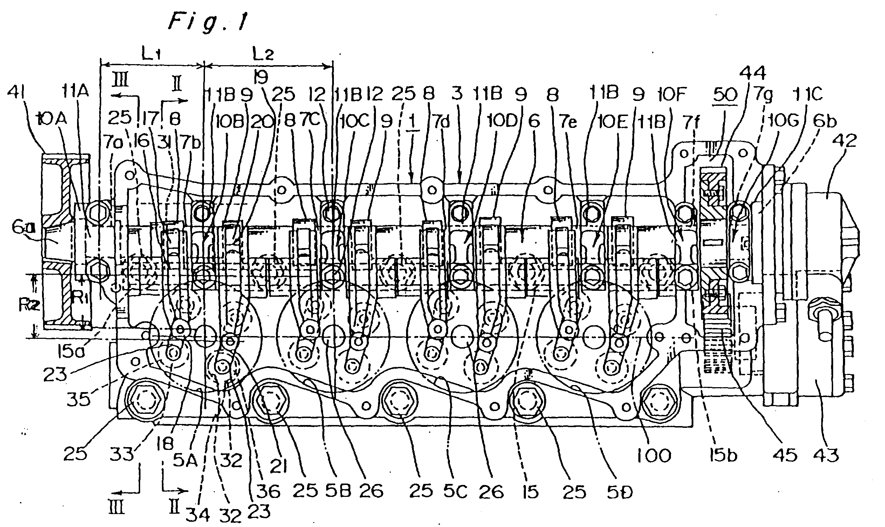

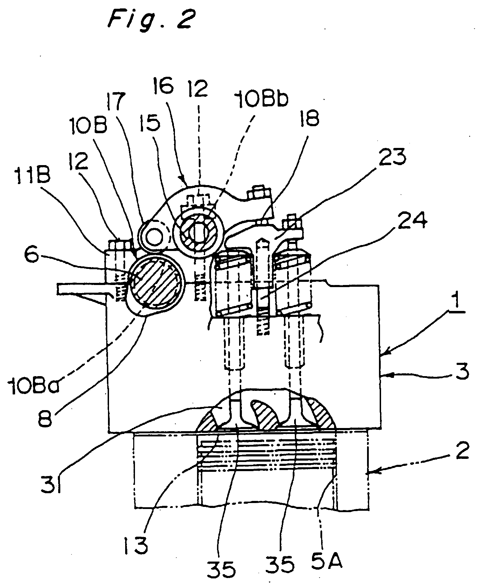

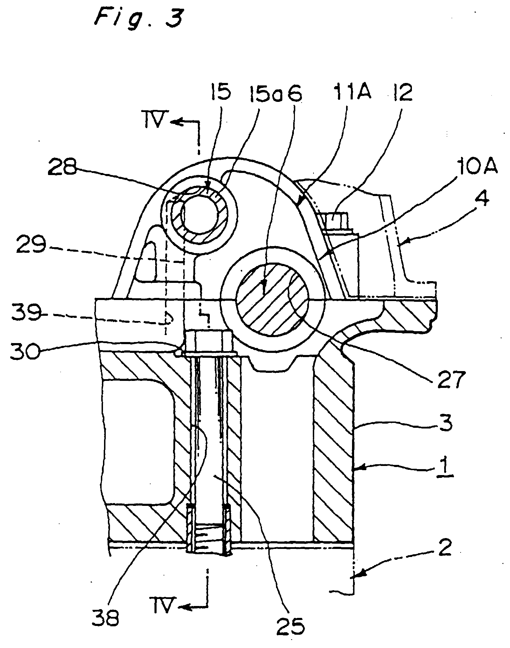

As shown in Fig. 1 and Fig. 2, an automotive four-cylinder direct injection type diesel engine 1 (hereinafter called engine 1 for short) in an embodiment of the invention comprises a cylinder block 2, a cylinder head 3 mounted on the upper side of the cylinder block 2, and a head cover 4 (see Fig. 3) mounted on the upper side of the cylinder head 3.

For the sake of convenience, hereinafter, the cylinder array direction, that is, the extending direction of the cylinder bore center line 100 which is a straight line passing through each cylinder bore center in a plane view, or the extending direction of the axial line of the engine output shaft (the lateral direction in Fig. 1) is referred to as the engine longitudinal direction, and the direction vertical to the engine longitudinal direction in a plane view is referred to as the engine width direction. As seen in the engine longitudinal direction, the side of the location of a belt pulley 41 (the left side in Fig. 1) is called the front, and the opposite side is called the rear. As seen in the engine width direction, the side of the location of a cam shaft 6 is called the right, and the opposite side is the left.

This engine 1 is a multiple-valve direct injection diesel engine of so-called SOHC (single overhead cam) type, at a position deviated to the left from the middle of the cylinder head 3 as seen in the engine width direction, four cylinders 5A to 5D are arranged in a row at a specific interval in the longitudinal direction of the cylinder head 3, that is, in the engine longitudinal direction (the engine front-rear direction), while at a position deviated to the right side, the cam shaft 6 is disposed so that its axial line may be directed to the engine longitudinal direction, that is, so as to be parallel to the cylinder bore center line 100. The engine 1 has a four-bolt tightening structure, and head bolts 25 are disposed at inter-cylinder bore positions so as to surround the cylinders 5A to 5D in a square form.

Moreover, at positions corresponding to the cylinder bore center of the cylinders 5A to 5D of the cylinder head 3, fuel injection valves 26 (fuel injection nozzles) are disposed so that the injection holes may confront the combustion chamber and that the axial lines may face the extending direction (vertical direction) of the cylinder axial line. In the cylinders 5A to 5D, around each fuel injection valve 26, two exhaust ports 33 and two intake ports 34 are opened to the combustion chamber 13. Each exhaust port 33 has an exhaust valve 35, and each intake port 34 has an intake valve 36 having a larger diameter than the exhaust valve 35. Each exhaust valve 35 and each intake valve 36 are opened and closed by the cam shaft 6 through an exhaust rocker arm 16 and an intake rocker arm 19 installed at specified positions corresponding to the cylinders 5A to 5D of a rocker shaft 15. The rocker shaft 15 is disposed to be parallel to the cam shaft 6, at an intermediate position of the cylinder bore center of the cylinders 5A to 5D, as seen in the engine width direction.

The configuration of each exhaust valve 35 and each intake valve 36 in the cylinder bore is described below. The two exhaust valves 35 are positioned at the front side of the cylinder bore center in the engine longitudinal direction (cylinder array direction). The both exhaust valves 35 are obliquely arranged so that the straight line linking the both centers may have a specific inclination angle to the cylinder bore center line 100 in a plane view. On other hand, the two intake valves 36 are positioned at the rear side of the cylinder bore center in the engine longitudinal direction. The both intake valves 36 are obliquely arranged so that the straight line linking the both centers may have a specific inclination angle to the cylinder bore center line in a plane view. The both exhaust valves 35 and both intake valves 36 arranged on both sides of the cylinder bore center as seen in the engine longitudinal direction are arranged at positions rotating clockwise by a specific angle around the cylinder bore center in a plane view. Therefore, the both exhaust valves 35 and both intake valves 36 are arranged zigzag in the engine longitudinal direction (cylinder array direction).

In this way, since the two exhaust valves 35 and two intake valves 36 are arranged zigzag, the intermediate position of two exhaust valves 35 (the position corresponding to a pushing part 18 of the exhaust rocker arm 16 described below) comes to the position close to the cam shaft 6 rather than the cylinder bore center (the position remote from the center of rocker shaft 15 by distance R1). On the other hand, the intermediate position of two intake valves 36 (the position corresponding to a pushing part 21 of the intake rocker arm 19 described below) comes to the position remote from the cam shaft 6 rather than the cylinder bore center (the position remote from the center of rocker shaft 15 by distance R2). The intermediate position of the both exhaust valves 35 and the intermediate position of the both intake valves 36 are deviated to the cylinder bore center side by a specific dimension in the engine longitudinal direction, as compared with the case of both exhaust valves 35 and intake valves 36 arranged side by side in the engine width direction, that is, the direction vertical to the cylinder bore center line 100 in a plane view.

The cam shaft 6 has seven journals 7a to 7g at specific intervals in specified positions in its axial line direction. The cam shaft 6 also comprises an exhaust cam 8 and an intake cam 9, before and after four journals 7b to 7e corresponding to the cylinder bore centers of the cylinders 5A to 5D. At the front end 6a of the cam shaft 6, moreover, there is a belt pulley 41 (corresponding to the "transmitter" described in the claims) which is rotated and driven by an engine output shaft, not shown, through a timing belt (corresponding to the winding transmitting member in the claims) not shown. In the cam shaft 6, a driving gear 44 is installed between the journal 7f and journal 7g near its rear end 6b. Herein, the belt pulley 41 projects forward from the front end of the engine near the upper surface of the cylinder head 3. The driving gear 44 is put in a gear box 50 provided in the cylinder head 3. In such state, the cam shaft 6 is disposed so that its axial line may face the engine longitudinal direction, that is, the cylinder array direction. The cam shaft 6 is mounted on the cylinder head 3 in a state of rotatably supporting the journals 7a to 7g by corresponding cam bearings 10A to 10G.

Hereinafter, the first to seventh cam bearings 10A to 10G are described. Of these cam bearings 10A to 10G, the first cam bearing 10A is disposed at the engine front end. The second to fifth cam bearings 10B to 10E are disposed at positions corresponding to the cylinder bore centers of the cylinders 5A to 5D in the engine longitudinal direction, that is, the bore center corresponding positions. The sixth cam bearing 10F and seventh cam bearing 10G are respectively disposed before and after the gear box 50.

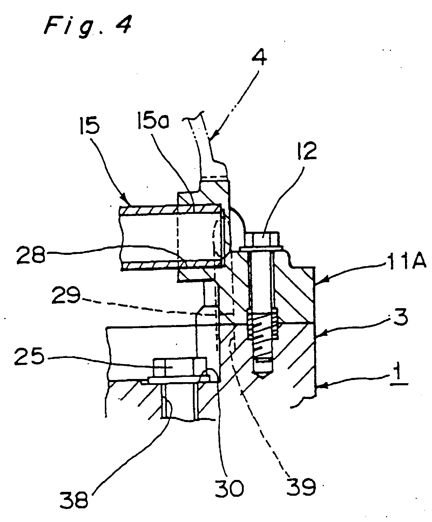

As shown in Fig. 3 and Fig. 4, the first cam bearing 10A comprises a cam cap 11A of a first type which is tightened and fixed to the cylinder head 3 by using a pair of cap bolts 12. This cam cap 11A of the first type has a semicircular cam bearing 27 for bearing the cam shaft 6 in its lower side. In the first cam bearing 10A, at a position obliquely upward of the cam bearing 27, there is a press-fitting recess 28 (corresponding to the support unit described in the claims) of a recess hole for inserting and fixing the front end 15a of the rocker shaft 15 by press-fitting. In this press-fitting recess 28, one end of an oil passage 29 communicating with an oil passage 39 in the cylinder head 3 is opened. The arcuate outer circumference of the cam cap 11A of the first type is the sealing surface of the head cover 4. The forming position of the press-fitting recess 28 in the width direction of the cam cap 11A of the first type is set at a position so that the press-fitting recess 28 may be close to each head bolt 25 positioned at the cam shaft 6 side, in the state of tightening and fixing the cam cap 11A of the first type in the cylinder head 3 (see Fig. 3 and Fig. 4).

On the other hand, the second to sixth cam bearings 10B to 10F are furnished with cam caps 11B of a second type. These cam caps 11B of the second type have semicircular cam bearings 10Ba for bearing the cam shaft 6 in the lower surface. Moreover, the cam caps 11B of the second type also have rocker shaft supports 10Bb for mounting and supporting the rocker shaft 15. The cam caps 11B of the second type are tightened and fixed to the cylinder head 3 by means of a pair of cap bolts 12. Of this pair of cap bolts 12, the cap bolt 12 positioned to the cylinder bore center side as seen in the engine width direction is disposed so as to penetrate the rocker shaft 15 mounted on the rocker shaft support 10Bb in the vertical direction, so as to tighten the rocker shaft 15 and the cam caps 11B of the second type together to the cylinder head 3 (joint tightening structure).

The seventh cam bearing 10G bears the rear end 6b of the cam shaft 6 at the rear side of the driving gear 44. This seventh cam bearing 10G has a cam cap 11C of a third type. The structure of the cam cap 11C of the third type is similar to the structure of the cam cap 11A of the first type, except that the press-fitting recess 28 is removed, and hence detailed description of the structure of the cam cap 11C of the third type is omitted.

Moreover, at the rear end 6b of the cam shaft 6, a vacuum pump 42 disposed at the rear end of the cylinder head 3 is coupled, and hence the vacuum pump 42 is driven by the engine output shaft through the cam shaft 6. The driving gear 44 is engaged with a driven gear 45 which is coupled to a hydraulic pump 43 for power steering provided at the rear end of the cylinder head 3, so that the hydraulic pump 43 may be also driven by the engine output shaft through the cam shaft 6.

The rocker shaft 15 is composed of a pipe (hollow member) of specified diameter, and is disposed so as to extend in the engine longitudinal direction (cylinder array direction), at the position of the cylinder bore center side from the cam shaft 6 as seen in the engine width direction. The front end 15a of the rocker shaft 15 is press-fitted and inserted into the press-fitting recess 28 of the cam cap 11A of the first type. On the other hand, the rear end 15b of the rocker shaft 15 is closed by a blind cap not shown, and is fixed by joint tightening to the cylinder head 3 together with the cam cap 11B of the sixth cam bearing 10F. Besides, the four intermediate parts of the rocker shaft 15 as seen in the engine longitudinal direction are fixed by joint tightening to the cylinder 3 together with the corresponding cam cap 11B of the second type, at the positions corresponding to the second to fifth cam bearings 10B to 10E.

In the mounting structure of the rocker shaft 15, as clear from Fig. 1, Fig. 3, and Fig. 4, head bolts 25 are arranged at specific intervals at the lower side of the rocker shaft 15. The rocker shaft 15 functions as the feed passage of lubricating oil to the valve operating mechanism. The lubricating oil thus fed into the rocker shaft 15 through the oil passage 29 of the cam cap 11A of the first type from the oil passage 39 of the cylinder block 2 is distributed and supplied into the rocker arms 16, 19, etc. provided in the cylinders 5A to 5D through the inside (hollow part) of the rocker shaft 15.

As seen in the engine longitudinal direction, at specified positions corresponding to the cylinders 5A to 5D of the rocker shaft 15, the exhaust rocker arm 16 and intake rocker arm 19 disposed in each cylinder are installed oscillatably. The exhaust rocker arm 16 and intake rocker arm 19 are common in the basic structure, and herein the specific structure of the exhaust rocker arm 16 is described first, and the structure of the intake rocker arm 19 is explained by reference thereto, and then the relative configuration of the two rocker arms 16, 19 is described.

As shown in Fig. 1 and Fig. 2, at one end (right end) of the exhaust rocker arm 16, a cam roller 17 (corresponding to the abutting part in the claims) abutting against the exhaust cam 8 provided in the cam shaft 6 is provided, and at the other end (left end), moreover, a pushing part 18 for pushing the two exhaust valves 35 together through a pressing member 23 is provided.

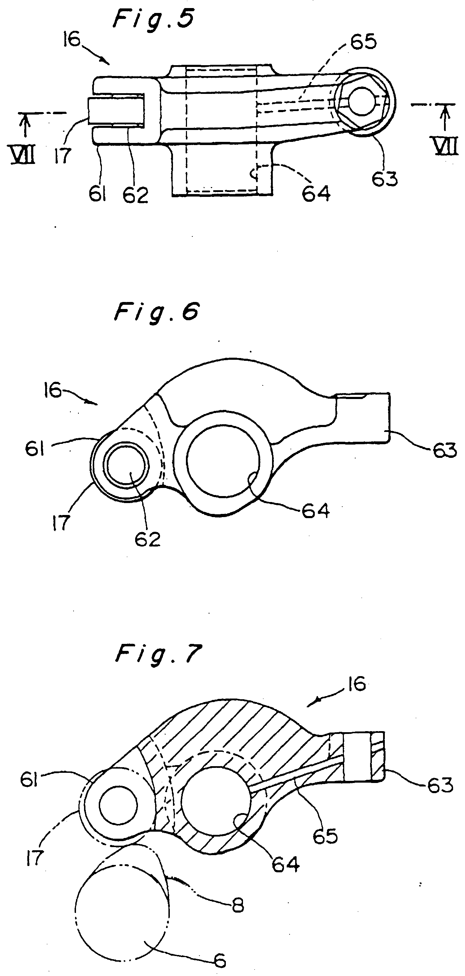

As shown in magnified views in Fig. 5 to Fig. 7, in this exhaust rocker arm 16, the cam roller 17 is rotatably supported by a shaft member 62 provided at one end 61. Nearly in the middle of the exhaust rocker arm 16, a hole 64 is formed for inserting the rocker shaft 15. The exhaust rocker arm 16 also has an oil passage 65 with one end opened to the hole 64, extending toward the other end 63 of the exhaust rocker arm 16.

Back to Fig. 1 and Fig. 2, the pressing member 23 is shaped nearly in a T-form, and is designed to move reciprocally in the vertical direction, as being guided by a guide shaft 24 erected on the cylinder head 3 at the middle position between both axial centers of the two exhaust valves 35. The both ends of the pressing member 23 abut against one corresponding end in the both exhaust valves 35. Therefore, when the exhaust rocker arm 16 oscillates along rotation of the cam shaft 6, the both exhaust valves 35 are opened and closed together at the same timing.

On the other hand, at one end (right end) of the intake rocker arm 19, a cam roller 20 (corresponding to the abutting part in the claims) abutting against the intake cam 9 provided in the cam shaft 6 is provided, and at the other end (left end), moreover, a pushing part 21 for pushing the two intake valves 36 together through a pressing member (not shown) having the same structure and function in the exhaust rocker arm is provided.

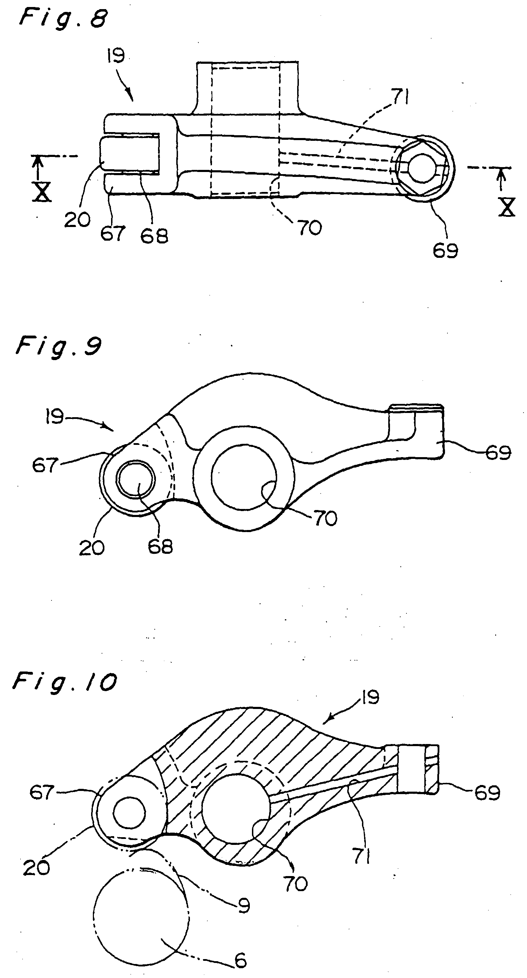

As shown in magnified views in Fig. 8 to Fig. 10, in this intake rocker arm 19, the cam roller 20 is rotatably supported by a shaft member 68 provided at one end 67. Nearly in the middle of the intake rocker arm 19, a hole 70 is formed for inserting the rocker shaft 15. The intake rocker arm 19 also has an oil passage 71 with one end opened to the hole 70, extending toward the other end 69 of the intake rocker arm 19.

Thus, when the intake rocker arm 19 oscillates along rotation of the cam shaft 6, the both intake valves 36 are opened and closed together at the same timing.

The exhaust rocker arm 16 and intake rocker arm 19 are, as clear from Fig. 1, shaped in a plane form so that the pushing parts 18, 21 are deviated from the cam rollers 17, 20 to the cylinder bore center as seen in the engine longitudinal direction, that is, in the axial line direction of the rocker shaft 15.

The engine 1 of the invention having such structure possesses the following characteristic advantages not seen in the conventional engine of the same time.

That is, first of all, in the basic structure of this engine 1, the two exhaust valves 35 and two intake valves 36 provided in each one of the cylinders 5A to 5D are disposed zigzag in the engine longitudinal direction (the axial line direction of the cam shaft 6), and the both exhaust valves 35 and both intake valves 36 are driven by the cam shaft 6 through one exhaust rocker arm 16 and one intake rocker arm 19, respectively. Thus, in the rocker arms 16, 19, the positions in the engine longitudinal direction of the pushing parts 18, 21 for pushing the pressing members 23 disposed at the intermediate position between axial centers of the both exhaust valves 35 or the intermediate position between axial centers of the both intake valves 36 are deviated to the cylinder bore center side, as compared with the parallel configuration of the both exhaust valves 35 and both intake valves 36 in the engine width direction (the direction vertical to the axial line direction of the cam shaft 6 in a plane view). Therefore, when the rocker arms 16, 19 are disposed so as to extend in the engine width direction in a plane view, that is, when the straight line linking the pushing parts 18,21 and cam rollers 17, 20 are arranged to extend in the engine width direction, the cam rollers 17, 20 of the both rocker arms 16, 19 come closer to each other in the engine longitudinal direction, and it is difficult to dispose the second to fifth cam bearings 10B to 10E between them, that is, at the bore center corresponding position. In spite of such difficulty, if dared to dispose the second to fifth cam bearings 10B to 10E at the bore center corresponding position, if the configuration of the head bolts 25 is of six-bolt tightening structure, in order to avoid mutual interference of the head bolts 25 and the cam bearings 10B to 10E, the cam bearings 10B to 10E must be spaced largely in the opposite direction from the cylinder bore position as seen in the engine width direction.

The head bolts 25 are driven in the head bolt holes 38 using the head bolt seats 30.

In the engine 1 of this embodiment, however, since the pushing parts 18, 21 of the exhaust rocker arm 16 and intake rocker arm 19 are deviated to the cylinder bore center side in the engine longitudinal direction to the cam followers 17, 20, the spacing between the cam rollers 17, 20 is wide. Therefore, it is easy to dispose the cam bearings 10B to 10E at the bore center corresponding position.

Moreover, when the second to fifth cam bearings 10B to 10E are disposed thus at the bore center corresponding position, if some of the head bolts 25 should be disposed at the bore center corresponding position, the second to fifth cam bearings 10B to 10E and the head bolt 25 may interfere with each other. In the engine 1 of this embodiment, however, since the location of the head bolts 25 is at positions away from the cylinder bore as seen in the engine longitudinal direction, that is, only at a slightly front side of the first cylinder 5A located at the foremost position, at an inter-cylinder bore position, and at a slightly rear position of the fourth cylinder 5D located at the rearmost position, and there is no head bolt 25 at the position corresponding to the cylinder bore center as seen in the engine longitudinal direction (axial line direction of the cam shaft 6).

It is therefore possible to dispose the second to fifth cam bearings 10B to 10E close to the cylinder bore center side as far as possible in the engine width direction, or the cam shaft 6, in other words, can be disposed close to the cylinder bore center side as far as possible. Accordingly, the direction of the engine 1 in the width direction can be minimized, and hence the engine 1 is made compact in the engine width direction.

Second, generally, when the belt pulley 41 driven and coupled through engine output shaft and timing belt is disposed at the front end 6a of the cam shaft 6, as in the case of the engine 1 of this embodiment, a tensile force acts on the first cam bearing 10A positioned at the engine front end from the engine output shaft side through the belt pulley 41. Moreover, at the first cam bearing 10A, part of the load (distributed portion) induced by the reaction force of the rocker arm located at the front side of the second cam bearing 10B acts. Accordingly, the load condition of the first cam bearing 10A is severer than that of the other cam bearings 10B to 10G.

Thus, in the engine of the embodiment, the second cam bearing 10B is located at the bore center corresponding position, and the lever ratio of the exhaust rocker arm 16 located at the front side, of the exhaust rocker arm 16 and intake rocker arm 19 corresponding to the first cylinder 5A, is set smaller than the lever ratio of the intake rocker arm 19 located at the rear side. In this constitution, since the exhaust rocker arm 16 of the first cylinder 5A is located ahead of the second cam bearing 1B, and therefore the load on the basis of the reaction force of the exhaust rocker arm 16 acts on the first cam bearing 10A. However, since the intake rocker arm 19 of the first cylinder 5A is located behind the second cam bearing 10B, the load on the basis of the reaction force of the intake rocker arm 19 does not act on the first cam bearing 10A. Moreover, since the lever ratio of the exhaust rocker arm 16 is smaller than the lever ratio of the intake rocker arm 19, the load on the basis of the reaction force of the exhaust rocker arm 16 is relatively small. Still more, the load on the basis of the reaction force of the exhaust rocker arm 16 is distributed and received by the first cam bearing 10A and second cam bearing 10B. Therefore, the load acting on the first cam bearing 10A on the basis of the reaction force of the exhaust rocker arm 16 is very small.

That is, the total load applied on the first cam bearing 10A is only the load from the belt pulley 41 and part of the load (distributed portion) on the basis of the reaction force of the exhaust rocker arm 16 of smaller level ratio of the two rocker arms 16, 19 of the first cylinder. By contrast, when the cam bearing is disposed at the inter-cylinder bore position as in the conventional engine, the first cam bearing 10A is subject to the load from the belt pulley 41, and part of the load (distributed portion) on the basis of the reaction forces of two rocker arms 16, 19 of the first cylinder 15A. Therefore, in the engine 1 of this embodiment, as compared with the conventional engine, the load acting on the first cam bearing 10A is small, and hence the reliability of the first cam bearing 10A is enhanced, and the diameter or width of the first cam bearing 10A may be reduced, thereby making compact the first cam bearing 10A and hence the engine 1.

Third, in the engine 1 of this embodiment, the lever ratio of the exhaust rocker arm 16 located at the front side, of the exhaust rocker arm 16 and intake rocker arm 16 in the cylinders 5A to 5D, is set smaller than the lever ratio of the intake rocker arm 19 located at the rear side, and the diameter of the exhaust valve 35 is set smaller than the diameter of the intake valve 36. Therefore, the passage sectional area of the intake port 34 opened and closed by the intake valve 36 is wider, and hence the intake filling efficiency and the engine output may be enhanced.

Fourth, in the engine 1 of the embodiment, the head bolt 25 located at the cam shaft 6 side as seen in the engine width direction is disposed beneath the rocker shaft 15. Hence, regardless of the presence of the head bolts 25, the rocker shaft 15 can be brought closer to the cylinder bore center side.

If, incidentally, the rocker shaft 15 is coupled to the cylinder head 3 by using other mounting member than the cam cap 11B, the cam cap 11B and the mounting member must be spaced from each other in the engine width direction, and it required to avoid mutual interference of the two. In this engine 1, however, the rocker shaft 15 is fixed integrally by joint tightening with the cam cap 11b by the cap bolt 12. Therefore, such inconvenience does not occur, so that the rocker shaft 15 and cam shaft 16 can be brought closer to the cylinder bore center side as seen in the engine width direction. By these synergistic effects, the compact design of the engine 1 in the width direction is further promoted.

Fifth, in the engine 1 of this embodiment, the front end 15a of the rocker shaft 15 is inserted and fixed in the press-fitting recess 28 provided in the first cam bearing 10A in the axial line direction (engine longitudinal direction) of the rocker shaft 15. Therefore, as compared with the conventional engine in which the front end 15a is bolted to the cylinder head 3, the structure is simplified, and the working efficiency is improved when mounting or dismounting the rocker shaft 15.

For example, moreover, in the case the head bolts 25 are disposed near the front end 15a of the rocker shaft 15, when the front end 15a is tightened to the cylinder head 3 by using tightening bolts or the like, in order to avoid mutual interference between the tightening bolts and the head bolts 25, it is necessary to keep a space for disposing the tightening bolts by shifting ahead the position of the first cam bearing 10A, which results in a long dimension in the longitudinal direction of the engine 1. In this engine 1, however, since the front end 15a of the rocker shaft 15 is inserted and fixed in the press-fitting recess 28 provided in the first cam bearing 10A, the space for disposing the tightening bolts is not required. Hence, as seen in the engine longitudinal direction, the first cam bearing 10A can be brought closer to the first cylinder 5A side. Therefore, as shown in Fig. 1, the interval L1 between the first cam bearing 10A and the second cam bearing 10B can be designed smaller than the distance L2 between bores substantially, so that the engine 1 may be made more compact in the longitudinal direction.

In the cylinder head 3 of the engine 1 of this embodiment, various ideas are incorporated in order to enhance the strength or durability of the cylinder head wall or water jacket wall near the cylinders 5A to 5D, which are described below.

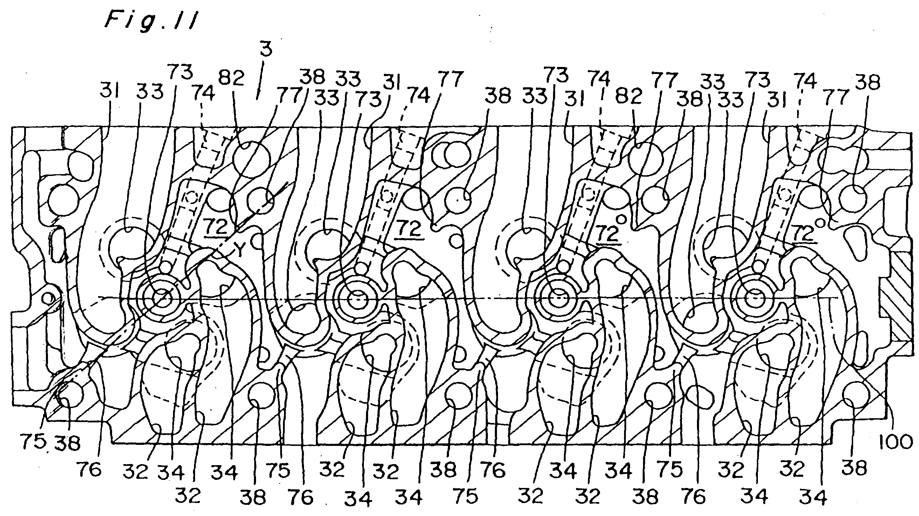

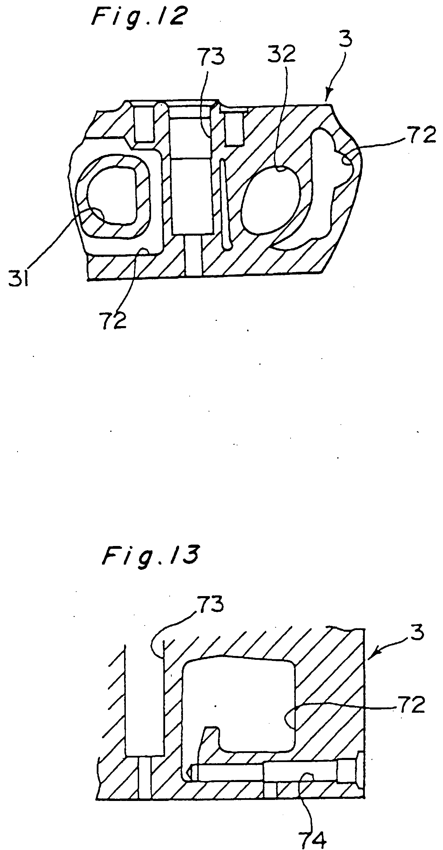

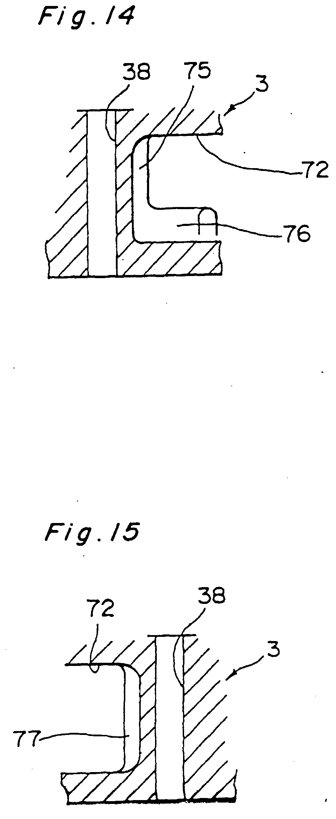

As shown in Fig. 11 to Fig. 15, in the cylinder head 3 of the engine 1, as seen in the engine longitudinal direction (that is, the cylinder head longitudinal direction), only at positions away from the cylinder bore, a pair of head bolt holes 38 are provided on both side of the cylinder bore center line, and four head bolt holes 38 are positioned around each cylinder bore in a plane view. In the cylinder 5A to 5D, the four head bolt holes 38 positioned around the cylinder bore are located at positions to form nearly a square when a quadrangle is drawn by linking the centers as apices in a plane view. Head bolts 25 are driven into these head bolt holes 38.

For example, in the first cylinder 5A, on a straight line Y (one diagonal line of the above square) passing through the center of the head bolt hole 38 located at the front left position and the center of the head bolt hole 38 located at the rear right position, of the four head bolt holes 38, the opening of the first intake port 34 to the combustion chamber 13, and the opening of the first exhaust port 33 to the combustion chamber 13 are disposed. Herein, the first intake port 34 is the intake port 34, out of the two intake ports 34, located at the left side of the cylinder head 3 as seen in the engine width direction, that is, at the position remote from the suction side. The first exhaust port 33 is the exhaust port 33, out of the two exhaust ports 33, located at the right side of the cylinder head 3 as seen in the engine width direction, that is, at the position remote from the exhaust side. The both intake ports 34 receive combustion air from the intake passage 32. The exhaust gas is discharged from the both exhaust ports 33 into the exhaust passage 31.

The other cylinders 5B to 5D are also structured similarly.

In the cylinder head 3, a water jacket 72 is formed for feeding (or discharging) cooling water through cross drill hole 74 and others for cooling the engine 1. In the cylinder head 3, moreover, a fuel injection valve insertion hole 73 is formed for inserting the fuel injection valve 26 (fuel injection nozzle), at the position corresponding to the cylinder bore center in a plane view. The cylinder head 3 further comprises an exhaust port side vertical wall 75 and an intake port side vertical wall 77 swelling into the water jacket for preferably regulating the flow of cooling water in the water jacket 72.

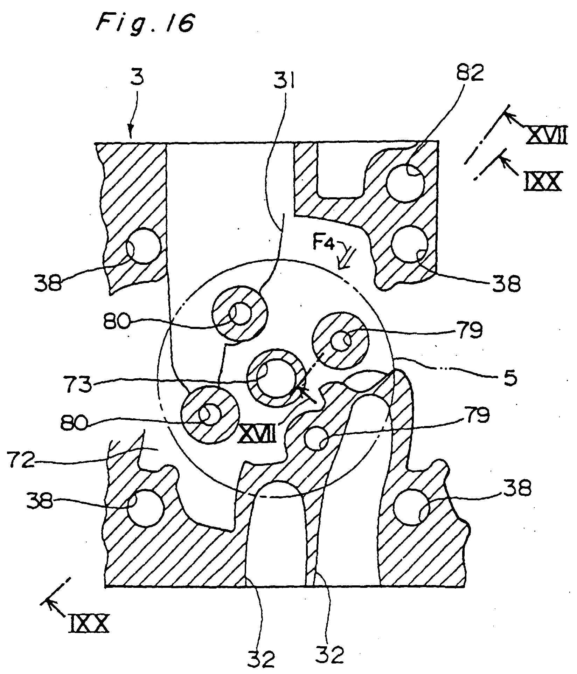

Further, as shown in Fig. 16, a shaft hole 79 for passing the valve stem of the intake valve 36 and a shaft hole 80 for passing the valve stem of the exhaust valve 35 are formed in the cylinder head 3. The cylinder head 3 also has a lubricating oil passage 82 for passing lubricating oil.

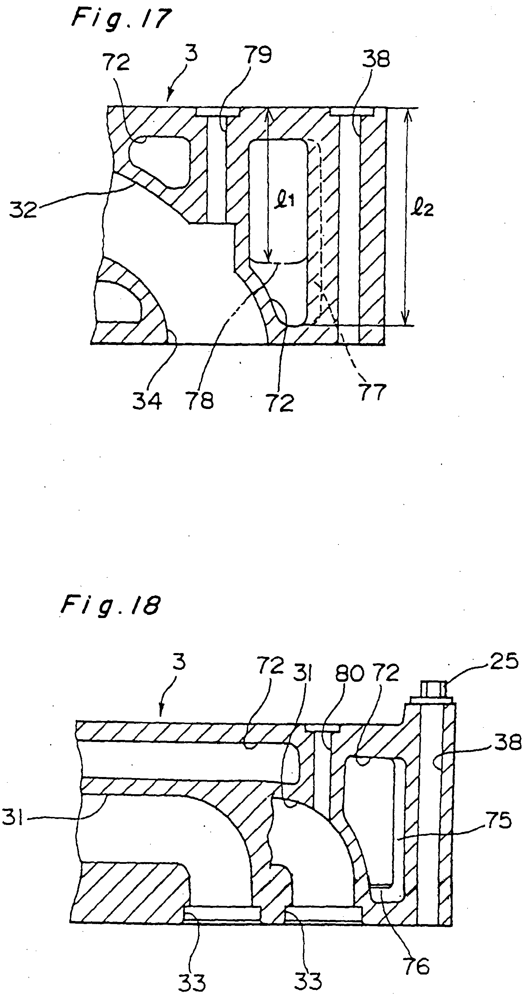

In addition, as shown in Fig. 12 and Fig. 17, in this cylinder head 3, the wall of the intake port 34 and intake passage 32 is coupled with an upper wall (middle deck) of the water jacket 72 at the upstream side in the intake flow direction. On the other hand, as shown in Fig. 12 and Fig. 18, a water jacket space is formed between the wall of the exhaust port 33 and exhaust passage 31 and the upper wall (middle deck) of the water jacket 72.

In the cylinder head 3, around the cylinders 5A to 5D, there is a rib 76 projecting upward from the bottom wall (lower deck) of the water jacket 72, from the first exhaust port 33 to the bolt boss of the upper left head bolt hole 38 located at a position confronting the exhaust port 33. By contrast, such rib 76 is not provided between the first intake port 34 and the bolt boss of the rear right head bolt hole 38 located at a position confronting the intake port 34.

As mentioned above, in the engine 1, since the wall of the intake port 34 or intake passage 32 is coupled with the upper wall of the water jacket 72 at the upstream side in the intake flow direction at the intake port side, the rigidity of the water jacket wall around the intake port 34 is relatively high. By contrast, at the exhaust port side, since there is a space between the wall of the exhaust port 33 or exhaust passage 31 and the upper wall of the water jacket 72, the rigidity of the water jacket wall around the exhaust port 33 is relatively low. Accordingly, the rib 76 is provided at the exhaust port side to increase the rigidity of the water jacket wall around the exhaust port 33, thereby enhancing the sealing performance of the cylinder bore at the exhaust port side.

On the other hand, at the intake port side, a tensile stress is induced on the water jacket wall around the intake port 34 due to axial force (tightening force) of the head bolts 25, and this tensile stress may cause to crack in the water jacket wall around the intake port 34. Therefore, at the intake port side, in order to relax the applied tensile stress, the rigidity of the water jacket wall around the intake port 34 should not be increased too much. Hence, in this engine 1, rib is not provided at the intake port side.

The reason of forming the rib 76 only at the exhaust port side is more specifically described below.

That is, as shown in Fig. 16 to Fig. 18, in this cylinder head 3, the upper wall of the exhaust port 33 or exhaust passage 31 does not communicate with the upper wall (middle deck) of the water jacket 72 at the exhaust port side. That is, the water jacket space is present between the two walls, and the rigidity of the water jacket wall or cylinder head wall is relatively low around the exhaust port 33. Hence, at the exhaust port side, the rigidity of the wall must be heightened.

On the other hand, at the intake port side, since the upper wall of the intake port 34 or intake passage 32 communicates with the upper wall of the water jacket 72 from an intermediate point, and therefore the rigidity of the water jacket wall or cylinder head wall is initially high around the intake port 34. Hence, basically, it is not necessary to form a rib at the intake port side. To the contrary, if the rigidity of the water jacket wall or cylinder head wall at the intake port side is heightened too much, the following problem may occur.

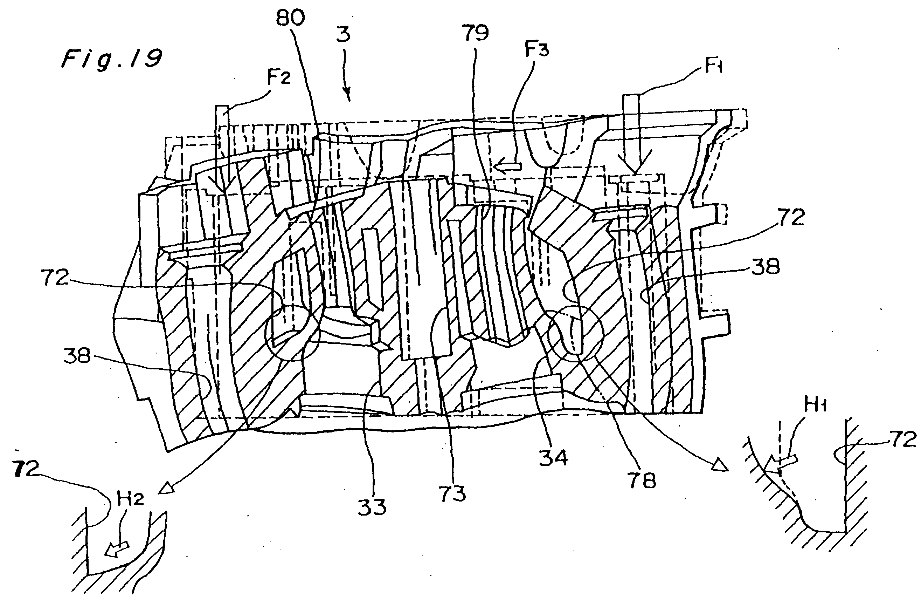

That is, as shown in Fig. 16 and Fig. 19, an axial force of the head bolts 25 acts on the cylinder head 3 as indicated by arrows F₁, F₂. At this time, around the intake port 34, the side wall is set up at the outer circumference side of the cylinder bore, and the lubricating oil passage 82 is provided at the immediate right side (outer side) of the head bolt 25 (head bolt hole 38), and the bolt boss of the head bolt hole 38 in which the head bolt 25 is inserted is high in the rigidity in the rightward (outward) direction, and hence the bolt boss tends to incline in the direction indicated by arrow F₄ . As a result, the upper wall (middle deck) of the water jacket 72 is pushed in the direction indicated by arrow F₃, and is deformed in a swollen form as shown in Fig. 19.

In Fig. 19, the broken line indicates the state without application of axial force of head bolt 25 on the cylinder head 3 (not deformed), and the solid line shows the state with application of axial force of head bolt 25 (deformed).

Hence, the throat of the first intake port 34 is deformed in a direction of expanding the volume as indicated by arrow H₁. Consequently, a tensile stress for encouraging the formation of crack is induced in the corner of the water jacket wall. Accordingly, if the rigidity of the water jacket wall is high, the tensile stress increases, and cracks are likely to occur. If, therefore, the rib 78 (see Fig. 17) as indicated by virtual line is formed in this area, the the tensile stress becomes very large, and cracks are more likely to occur. Therefore, in the cylinder head 3 of the engine 1 of this embodiment, such rib 78 is not formed in this area, preventing the rigidity from being increased excessively, and crack formation is avoided.

By contrast, around the exhaust port of the cylinder head 3, the pressing force in the direction of arrow F₃ induced on the water jacket wall or cylinder head wall acts on the corner of the peripheral wall of the first exhaust port 33 in a compressive direction as indicated by arrow H₂, and a compressive stress is induced in this area. Such compressive stress does not lead to formation of crack. Therefore, the rib 76 is provided in this area to heighten the rigidity, and the sealing performance of the cylinder bore is enhanced. This rib 76 does not have any adverse effect on crack formation, but works to suppress formation of crack.

Incidentally, as mentioned above, the cylinder head 3 has the cross drill hole 74 for feeding (discharging) cooling water in the water jacket 72, extending from its exhaust side (right side) inward of the cylinder head nearly toward the first intake port 34. Accordingly, without rib between the first intake port 34 and the bolt boss of the rear right head bolt hole 38 confronting the intake port 34, the water jacket wall around the intake port 34 is reinforced by the peripheral wall of the cross drill hole 74.

Such cross drill hole 74 is not provided at the intake side (left side) of the cylinder head 3. This is intended to share the cylinder block with the subsidiary chamber type (vortex chamber type) diesel engine.

In the engine 1 of t his embodiment, since the second to fifth cam bearings 10B to 10E are located at the bore center corresponding position, structurally, it is hard to lay out the nozzle holding member for fixing the fuel injection valve 26 (fuel injection nozzle). In this engine 1, the layout is made easy by properly designing the configuration of the nozzle holding member, and the cylinder head 3 is made compact at the same time, which is described below.

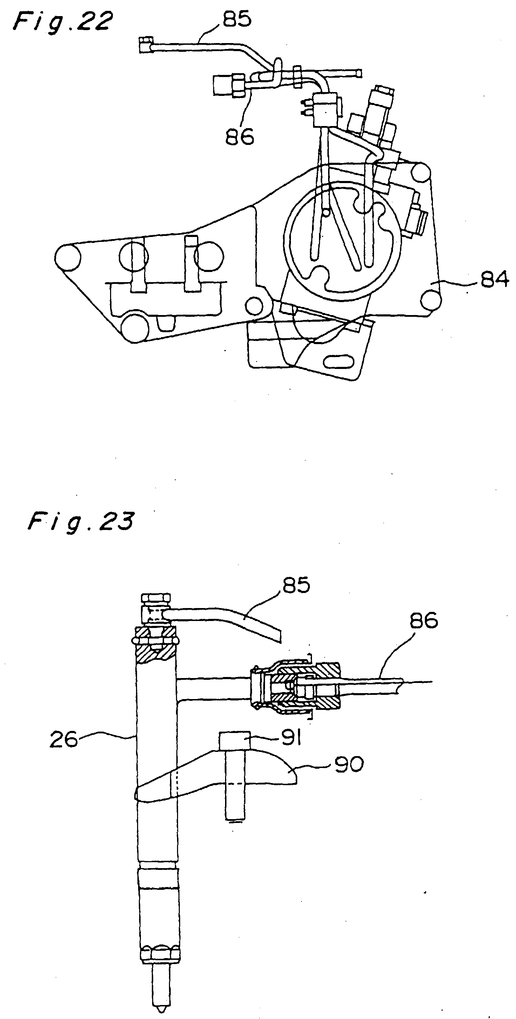

As shown in Fig. 22 to Fig. 23, in this engine 1, the fuel discharged from a fuel pump at high pressure is fed into the fuel injection valves 26 of the first to fourth cylinders 5A to 5D through first and fourth inlet pipings 86A to 86D. The excess fuel not injected by the fuel injection valves 26 of the cylinders 5A to 5D is returned to the fuel tank (not shown) or fuel pump 84 through a fuel return piping 85. Herein, the first to fourth inlet pipings 86A to 86D are extending in the engine width direction at a position adjacent to the fuel injection valve 26.

In the cylinders 5A to 5D of the engine 1, the fuel injection valves 26 are disposed in the cylinder bore center in a plane view. A nozzle holding member 90 for fixing the fuel injection valve 26 is disposed between the valve stem of the intake valve 36 and the valve stem of the exhaust valve 35, at a position of the opposite side of the cam shaft 6 with respect to the fuel injection valve 26 as seen in the engine width direction. That is, in the cylinders 5A to 5D, the nozzle holding member 90 is located immediately at the left side of the fuel injection valve 26. The nozzle holding member 90 is fixed to the cylinder head 3 by setbolts 91. In this engine 1, the inlet pipings 86A to 86D are installed above the nozzle holding member 90. In a plane view, the extending direction of the nozzle holding member 90 and the extending direction of the inlet pipings 86A to 86D are slightly deviated from each other.

Thus, in this engine 1, the configuration of the nozzle holding member 90 is easy. That is, generally, the fuel injection valve 26 is disposed near the cylinder bore center in a plane view, and the nozzle holding member 90 is disposed adjacently to the nozzle of the fuel injection valve 26. In the diesel engine 1, since the cam bearings 10B to 10E are disposed at the bore center corresponding positions, if the nozzle holding member 90 is located at the cam shaft 6 side from the fuel injection valve 26 as seen in the engine width direction as in the conventional engine, that is, at the right side of the fuel injection valve 26, the layout is very difficult. In this engine 1, however, since the nozzle holding member 90 is located at the opposite side of the cam shaft 6 with respect to the fuel injection valve 26, that is, to the left side of the fuel injection valve 26, the layout of the nozzle holding member 90 is extremely easy. Moreover, since the inlet pipings 86A to 86D are disposed above the nozzle holding member 90, the nozzle holding member 90 and inlet pipings 86A to 86D do not interfere with each other in the layout. Therefore, the layout of the nozzle holding member 90 is much easier. Moreover, since the extending direction of the nozzle holding member 90 and the extending direction of the inlet pipings 86A to 86D are deviated from each other, the layout of the nozzle holding member 90 is further easier.

By disposing the nozzle holding member 90 in this manner, it contributes to compact design of the cylinder head 3 and also the engine 1.

Although the present invention has been described in terms of preferred embodiments, it will be apparent to those of skill in the art that numerous variations and modifications may be made without departing from the scope thereof, as set forth in the following claims.

## Claims

1. A direct injection type diesel engine having two intake valves (36) and two exhaust valves (35) provided in each cylinder (5), with the two intake valves (36) disposed zigzag so that the intake valve center line which is a straight line passing through the center of both intake valves (36) in a plane view and the cylinder bore center line (100) which is a straight line passing through the center of each cylinder bore may intersect at a specific inclined angle, and with the two exhaust valves (35) disposed zigzag so that the exhaust valve center line which is a straight line passing through the center of both exhaust valves (35) in a plane view and the cylinder bore center line (100) may intersect at a specific inclined angle, wherein
one cam shaft (6) which is extended in the extending direction of the cylinder bore center line (100) and is rotated and driven by an engine output shaft is disposed ahead of one peripheral edge of the cylinder bore as seen in the direction vertical to the cylinder bore center line (100) in a plane view,
the two intake valves (36) are opened or closed by an intake rocker arm (19) which is oscillated and driven by an intake cam (9) provided on the cam shaft (6), and the two exhaust valves (35) are opened or closed by an exhaust rocker arm (16) which is oscillated and driven by an exhaust cam (8) provided on the cam shaft (6),
characterized in that
a pair of head bolt holes (38) are provided only at positions away from the cylinder bore as seen in an extending direction of the cylinder bore center line (100), on both sides of the cylinder bore line, so that four head bolt holes (38) are disposed around each cylinder bore, and
a cam bearing (10) for rotatably supporting the cam shaft is disposed at a position corresponding to the cylinder bore center as seen in the extending direction of the cylinder bore center line (100).

2. A direct injection type diesel engine according to claim 1, characterized in that
the intake rocker arm (19) and the exhaust rocker (16) are disposed parallel in the extending direction of the cylinder bore center line (100),
and the cam bearing (10) is disposed between the intake rocker arm (19) and the exhaust rocker arm (16) as seen in the extending direction of the cylinder bore center line (100) in a plane view.

3. A direct injection type diesel engine according to one of the preceding claims characterized in that
a transmitter (41) driven and coupled with an engine output shaft through a winding transmitting member is disposed at the front end of the cam shaft (6),
a rocker shaft (15) for oscillatably supporting the intake rocker arm (19) and exhaust rocker arm (16) is extended and disposed parallel to the cam shaft (6), at a position closer to the cylinder bore center than the cam shaft (6) as seen in a direction vertical to the extending direction of the cylinder bore center line (100) in a plane view, and
the lever ratio of the rocker arm (16, 19) located at the front side of either intake rocker arm (19) or exhaust rocker arm (16) corresponding to the cylinder bore located at the foremost position is set smaller than the lever ratio of the rocker arm (16, 19) located at the rear side.

4. A direct injection type diesel engine according to one of the preceding claims characterized in that the intake rocker arm (19) comprises an abutting part (20) abutting against the intake cam (9), and a pushing part (21) located at an intermediate position of both centers of two intake valves (36) in a plane view for pushing the two intake valves (36) at a same timing, and the exhaust rocker arm (16) comprises an abutting part (17) abutting against the exhaust cam (8), and a pushing part (18) located at an intermediate position of both centers of two exhaust valves (35) in a plane view for pushing the two exhaust valves (35) at a same timing, and
the pushing part (18, 21) is deviated to the cylinder bore center side with respect to the abutting part (17, 20) as seen in the extending direction of the cylinder bore center line (100), in at least one of the both rocker arms (16, 19).

5. A direct injection type diesel engine according to claim 4, characterized in that the pushing part (21) is deviated to the cylinder bore center side with respect to the abutting part (20) as seen in the extending direction of the cylinder bore center line (100), only in the intake rocker arm (19).

6. A direct injection type diesel engine according to claim 4, characterized in that the pushing part (18, 21) is deviated to the cylinder bore center side with respect to the abutting part (17, 20) as seen in the extending direction of the cylinder bore center line (100), individually, in both intake rocker arm (19) and exhaust rocker arm (16), and
the deviation extent of the intake rocker arm (19) is larger than the deviation extent of the exhaust rocker arm (16).

7. A direct injection type diesel engine according to one of the claims 3 to 6, characterized in that the cam shaft (6) is located at a position lower than the rocker shaft (15).

8. A direct injection type diesel engine according to one of the claims 4 to 7, characterized in that the arm length of either rocker arm (16, 19) of the intake rocker arm (19) and exhaust rocker arm (16), which is smaller in the deviation extent of the pushing part (18, 21) to the cylinder bore center side with respect to the abutting part (17, 20) as seen in the extending direction of the cylinder bore center line (100), is shorter than the arm length of the other rocker arm (16, 19).

9. A direct injection type diesel engine according to one of the preceding claims, characterized in that the valve diameter of the intake valve (36) is set larger than the valve diameter of the exhaust valve (35).

10. A direct injection type diesel engine according to one of the preceding claims, characterized in that the arm length of the intake rocker arm (19) is longer than the arm length of the exhaust rocker arm (16).

11. A direct injection type diesel engine according to one of the preceding claims, characterized in that the cam bearing (10) has a cam cap (11) tightened and fixed to the cylinder head (3).

12. A direct injection type diesel engine according to one of the claims 3 to 11, characterized in that the lever ratio of the exhaust rocker arm (16) is set smaller than the lever ratio of the intake rocker arm (19).

13. A direct injection type diesel engine according to claim 11 or 12, characterized in that the rocker shaft (15) is fixed to the cam cap (11) integrally by joint tightening by the bolt (12) tightening the cam cap (11), and the head bolt hole (38) located at the cam shaft (6) side from the cylinder bore center line (100), out of the head bolt holes (38), is disposed at position overlapping with the rocker shaft (15) in a plane view.

14. A direct injection type diesel engine according to one of the claims 3 to 13, characterized in that the front end portion of the rocker shaft (15) is fitted and fixed in an extending direction of the cylinder bore center line (100) with respect to the supporting part provided in the cam bearing (10) positioned at the engine front end portion.

15. A direct injection type diesel engine according to one of the preceding claims, characterized in that an upstream portion of each of two intake ports (34) is opened to a first side portion of a cylinder head (3), while an upstream portion of each of two exhaust ports (33) is opened to a second side portion of the cylinder head (3), as seen in the direction vertical to the cylinder bore center line (100) in a plane view,
an opening to a combustion chamber (13) of the intake port (34) remote from the first side portion of the cylinder head (3) and an opening to the combustion chamber (13) of the exhaust port (33) remote from the second side portion of the cylinder head (3) are disposed on one diagonal line of a square having each center of four head bolt holes (38) disposed around each cylinder bore as the peaks, and
a rib (76) projecting into a water jacket (72) is provided in the bottom wall of the water jacket (72), between the exhaust port (33) and the bolt boss of the head bolt hole (38) adjacent to the exhaust port (33) being positioned on the diagonal line.

16. A direct injection type diesel engine of claim 15, characterized that the wall of the intake port (34) is coupled with the upper wall of the water jacket (72) at the upstream side in the intake flow direction, and a space is formed between the wall part of the exhaust port (33) and the upper wall of the water jacket (72).

17. A direct injection type diesel engine according to one of the preceding claims, characterized in that a cross drill hole (74) for feeding cooling water of a water jacket (72) is provided, extending inward of the cylinder head (3), at least from a side portion of the cylinder head (3) near an upstream portion of each of exhaust ports (33), toward a position between an opening of an exhaust port (33) and an opening of an intake port (34), said two openings being disposed adjacently each other.

18. A direct injection type diesel engine of claim 17, characterized in that the cross drill hole (74) is provided only at the exhaust side of the cylinder head (3).

19. A direct injection type diesel engine according to one of the preceding claims, characterized in that a fuel injection nozzle (26) is disposed near the cylinder bore center in a plane view, and a nozzle holding member (90) for fixing the fuel injection nozzle (26) is disposed between the intake valve shaft (36) and exhaust valve shaft (35) at a position on the opposite side of the cam shaft (6) relative to the fuel injection nozzle (26).

20. A direct injection type diesel engine of claim 19, characterized in that an inlet piping (86) for feeding fuel to the fuel injection nozzle (26) is provided above the nozzle holding member (90).

21. A direct injection type diesel engine of claim 20, characterized in that the extending direction of the nozzle holding member (90) is set to a direction nearly the same as the direction of said exhaust valve (35) center line or said intake valve (36) center line, and
the extending direction of the nozzle holding member (90) and the extending direction of the inlet piping (86) are deviated from each other in a plane view.

22. A direct injection type diesel engine of claim 20, characterized in that the inlet piping (86) is extending in a direction vertical to the extending direction of the cylinder bore center line (100) near the fuel injection nozzle (26).

## Patentansprüche

1. Direkteinspritz-Dieselmotor mit zwei Einlaßventilen (36) und zwei Abgasventilen (35), welche in jedem Zylinder (5) vorgesehen sind, wobei die zwei Einlaßventile (36) zickzackförmig angeordnet sind, so daß die Einlaßventilmittellinie, welche eine gerade Linie ist, welche sich durch die Mittelpunkte beider Einlaßventile (36) in einer ebenen Ansicht erstreckt, und die Zylinderbohrungsmittellinie (100), welche eine gerade Linie ist, welche sich durch den Mittelpunkt jeder Zylinderbohrung erstreckt, einander in einem spezifischen bzw. vorbestimmten geneigten Winkel schneiden, und wobei die zwei Abgasventile (35) zickzackförmig angeordnet sind, so daß die Abgasventilmittellinie, welche eine gerade Linie ist, die sich durch die Mittelpunkte beider Abgasventile (35) in einer ebenen Ansicht erstreckt, und die Zylinderbohrungsmittellinie (100) sich in einem spezifischen bzw. vorbestimmten geneigten Winkel schneiden, wobei eine Nockenwelle (6), welche in der Erstreckungsrichtung der Zylinderbohrungsmittellinie (100) erstreckt ist und gedreht und angetrieben wird durch eine Motorausgangswelle, vor einer peripheren Kante der Zylinderbohrung in der Richtung vertikal zu der Zylinderbohrungsmittellinie (100), in einer planen Ansicht gesehen, angeordnet ist,
die zwei Einlaßventile (36) geöffnet oder geschlossen werden durch einen Einlaßkipphebel (19), welcher oszilliert und angetrieben wird durch eine Einlaßnocke (9),welche an der Nockenwelle (6) vorgesehen ist, und die zwei Abgasventile (35) geöffnet oder geschlossen werden durch einen Abgaskipphebel (16), welcher oszilliert und angetrieben wird durch eine Abgasnocke (8), welche an der Nockenwelle (6) vorgesehen ist,
dadurch gekennzeichnet, daß ein Paar von Kopfbolzen- bzw. -schraubenlöchern (38) nur an Positionen entfernt von der Zylinderbohrung vorgesehen sind, betrachtet in einer Erstreckungsrichtung der Zylinderbohrungsmittellinie (100) an beiden Seiten der Zylinderbohrungslinie, so daß vier Kopfschraubenlöcher (38) um jede Zylinderbohrung herum angeordnet sind, und
eine Nockenlagerung (10) zum drehbaren Tragen der Nockenwelle an einer Position entsprechend der Zylinderbohrungsmitte bei Betrachtung in der Erstreckungsrichtung der Zylinderbohrungsmittellinie (100) angeordnet ist.

2. Direkteinspritz-Dieselmotor gemäß Anspruch 1, dadurch gekennzeichnet, daß der Einlaßkipphebel (19) und der Abgaskipphebel (16) parallel in der Erstreckungsrichtung der Zylinderbohrungsmittellinie (100) angeordnet sind und die Nockenlagerung (10) zwischen dem Einlaßkipphebel (19) und dem Abgaskipphebel (16) angeordnet ist, betrachtet in der Erstreckungsrichtung der Zylinderbohrungsmittellinie (100) in einer ebenen Ansicht.

3. Direkteinspritz-Dieselmotor gemäß einem der vorangehenden Ansprüche, dadurch gekennzeichnet, daß
eine Übertragungseinrichtung (41), welche angetrieben und angekuppelt mit einer Motorausgangswelle über ein Drehübertragungselement ist, an dem vorderen Ende der Nockenwelle (6) angeordnet ist,
eine Kipphebelwelle (15) zum oszillierenden Tragen des Einlaßkipphebels (19) und des Abgaskipphebels (16) sich erstreckt und angeordnet ist parallel zu der Nockenwelle (6) an einer Position näher zu der Mitte der Zylinderbohrung als die Nockenwelle (6), betrachtet in einer Richtung vertikal zu der Erstreckungsrichtung der Zylinderbohrungsmittellinie (100) in einer ebenen Ansicht, und
das Hebelverhältnis des Kipphebels (16, 19), welche an der Vorderseite jedes Einlaßkipphebels (19) oder Abgaskipphebels (16), entsprechend der Zylinderbohrung an der vordersten Position angeordnet, kleiner eingestellt ist als das Hebelverhältnis des Kipphebels (16, 19), welcher an der Rückseite angeordnet ist.

4. Direkteinspritz-Dieselmotor gemäß einem der vorangehenden Ansprüche, dadurch gekennzeichnet, daß der Einlaßkipphebel (19) ein Anstoßteil (20) aufweist, welches an die Einlaßnocke (9) anstößt und ein Druckteil (21), welches an einer Zwischenposition von beiden Mittelpunkten der zwei Einlaßventile (36) in einer ebenen Ansicht positioniert ist zum Drücken der zwei Einlaßventile (36) zum selben Zeitpunkt, und der Abgaskipphebel (16) ein Anstoßteil (17), welches gegen die Abgasnocke (8) anstößt, und ein Druckteil (18) umfaßt, welches an einer Zwischenposition der beiden Mittelpunkte der zwei Abgasventile (35) in einer ebenen Ansicht positioniert ist zum Drücken der zwei Abgasventile (35) zum selben Zeitpunkt, und das Druckteil (18, 21) zu der Zylinderbohrungsmittelseite abgelenkt ist mit Bezug zu dem Anstoßteil (17, 20), in der Erstreckungsrichtung der Zylinderbohrungsmittellinie (100) gesehen, bei wenigstens einem der beiden Kipphebel (16, 19).

5. Direkteinspritz-Dieselmotor gemäß Anspruch 4, dadurch gekennzeichnet, daß das Druckteil (21) nur bei dem Einlaßkipphebel (19) zu der Zylinderbohrungsmittelseite mit Bezug zu dem Anstoßteil 20 abgelenkt ist, gesehen in der Erstreckungsrichtung der Zylinderbohrungsmittellinie (100).

6. Direkteinspritz-Dieselmotor gemäß Anspruch 4, dadurch gekennzeichnet, daß das Druckteil (18, 21) zu der Zylinderbohrungsmittelseite abgelenkt ist mit Bezug zu dem Anstoßteil (17, 20), gesehen in der Erstreckungsrichtung der Zylinderbohrungsmittellinie (100), unabhängig bei sowohl dem Einlaßkipphebel (19) als auch dem Abgaskipphebel (16), und
die Ablenkungsausdehnung des Einlaßkipphebels (19) größer ist als die Ablenkungsausdehnung des Abgaskipphebels (16).

7. Direkteinspritz-Dieselmotor gemäß einem der Ansprüche 3 bis 6, dadurch gekennzeichnet, daß die Nockenwelle (6) an einer Position unterhalb der Kipphebelwelle (15) angeordnet ist.

8. Direkteinspritz-Dieselmotor gemäß einem der Ansprüche 4 bis 7, dadurch gekennzeichnet, daß die Armlänge von einem Kipphebel (16, 19) von dem Einlaßkipphebel (19) und dem Abgaskipphebel (16), welche kleiner in der Ablenkungsausdehnung des Druckteiles (18, 21) zu der Zylinderbohrungsmittelseite mit Bezug zu dem Anstoßteil (17, 20) ist, gesehen in der Erstreckungsrichtung der Zylinderbohrungsmittellinie (100), kürzer ist als die Armlänge des anderen Kipphebels (16, 19).

9. Direkteinspritz-Dieselmotor gemäß einem der vorangehenden Ansprüche, dadurch gekennzeichnet, daß der Ventildurchmesser des Einlaßventiles (36) größer eingestellt ist als der Ventildurchmesser des Abgasventiles (35).

10. Direkteinspritz-Dieselmotor gemäß einem der vorangehenden Ansprüche, dadurch gekennzeichnet, daß die Armlänge des Einlaßkipphebels (19) länger ist als die Armlänge des Abgaskipphebels (16).

11. Direkteinspritz-Dieselmotor gemäß einem der vorangehenden Ansprüche, dadurch gekennzeichnet, daß die Nockenlagerung (10) eine Nockenkappe (11) aufweist, welche an dem Zylinderkopf (3) festgezogen und fixiert ist.

12. Direkteinspritz-Dieselmotor gemäß einem der Ansprüche 3 bis 11, dadurch gekennzeichnet, daß das Hebelverhältnis des Abgaskipphebels (16) kleiner eingestellt ist als das Hebelverhältnis des Einlaßkipphebels (19).

13. Direkteinspritz-Dieselmotor gemäß Anspruch 11 oder 12, dadurch gekennzeichnet, daß die Kipphebelwelle (15) an der Nockenkappe (11) integral durch verbindendes Festziehen des Bolzens (12), welcher die Nockenkappe (11) festzieht, befestigt ist und daß das Kopfschraubenloch (38), welches an der Seite der Nockenwellen(6) der Zylinderbohrungsmittellinie (100) liegt, der Kopfschraubenlöcher (38) in einer Position angeordnet ist, welche mit der Kipphebelwelle (15) in einer planen Ansicht überlappt.

14. Direkteinspritz-Dieselmotor gemäß einem der Ansprüche 3 bis 13, dadurch gekennzeichnet, daß der vordere Endabschnitt der Kipphebelwelle 15 eingepaßt und fixiert ist in einer Erstreckungsrichtung der Zylinderbohrungsmittellinie (100) mit Bezug zu dem Tragteil, welches in der Nockenlagerung (10) vorgesehen ist, welche an der Motorvorderseite positioniert ist.

15. Direkteinspritz-Dieselmotor gemäß einem der vorangehenden Ansprüche, dadurch gekennzeichnet, daß ein stromaufwärtiger Abschnitt jedes der zwei Einlaßkanäle (34) geöffnet ist zu einem ersten Seitenabschnitt eines Zylinderkopfes (3), während ein stromaufwärtiger Abschnitt jedes der zwei Abgaskanäle (33) geöffnet ist zu einem zweiten Seitenabschnitt des Zylinderkopfes (3), in einer planen Ansicht gesehen in der Richtung vertikal zu der Zylinderbohrungsmittellinie (100), eine Öffnung zu einem Verbrennungsraum (13) des Einlaßkanales (34) entfernt von dem ersten Seitenabschnitt des Zylinderkopfes (3) und eine Öffnung zu dem Verbrennungsraum (13) des Abgaskanales (33) entfernt von dem zweiten Seitenabschnitt des Zylinderkopfes (3) auf einer diagonalen Linie eines Quadrates angeordnet sind, welches jeden Mittelpunkt der vier Kopfschraubenlöcher (38) um jede Zylinderbohrung als dessen Spitzen aufweist, und eine Rippe (76), welche in einen Wassermantel (72) hineinragt, vorgesehen ist in der Bodenwand des Wassermantels (72) zwischen dem Abgaskanal (33) und dem Schraubenbuckel des Kopfschraubenloches (38), angrenzend zu dem Abgaskanal (33), welcher auf der diagonalen Linie positioniert ist.

16. Direkteinspritz-Dieselmotor gemäß Anspruch 15, dadurch gekennzeichnet, daß die Wand des Einlaßkanales (34) mit der oberen Wand des Wassermantels (72) verbunden ist an der stromaufwärtigen Seite in der Einlaßflußrichtung und ein Abstand zwischen dem Wandteil des Abgaskanales (33) und der oberen Wand des Wassermantels (72) ausgebildet ist.

17. Direkteinspritz-Dieselmotor gemäß einem der vorangehenden Ansprüche, dadurch gekennzeichnet, daß ein kreuzendes Bohrloch (74) zum Zuführen von Kühlwasser eines Wassermantels (72) vorgesehen ist, welches sich zur Innenseite des Zylinderkopfes (3) erstreckt, wenigstens von einem Seitenabschnitt des Zylinderkopfes (3) nahe einem stromaufwärtigen Abschnitt jedes Abgaskanals (33) zu einer Position zwischen einer Öffnung des Abgaskanales (33) und einer Öffnung eines Einlaßkanales (34), wobei die zwei Öffnungen angrenzend zueinander angeordnet sind.

18. Direkteinspritz-Dieselmotor gemäß Anspruch 17, dadurch gekennzeichnet, daß das kreuzende Bohrloch (74) nur an der Abgasseite des Zylinderkopfes (3) vorgesehen ist.

19. Direkteinspritz-Dieselmotor gemäß einem der vorangehenden Ansprüche, dadurch gekennzeichnet, daß eine Kraftstoffeinspritzdüse (26) nahe dem Zylinderbohrungsmittelpunkt in einer planen Ansicht angeordnet ist und ein Düsenhalteelement (90) zum Fixieren der Kraftstoffeinspritzdüse (26) zwischen der Einlaßventilwelle (36) und der Abgasventilwelle (35) an einer Position an der gegenüberliegenden Seite der Nockenwelle (6) in Bezug zu der Kraftstoffeinspritzdüse (26) angeordnet ist.

20. Direkteinspritz-Dieselmotor gemäß Anspruch 19, dadurch gekennzeichnet, daß eine Einlaßröhre (86) zum Zuführen von Kraftstoff zu der Kraftstoffeinspritzdüse (26) oberhalb des Düsenhalteelements (90) vorgesehen ist.

21. Direkteinspritz-Dieselmotor gemäß Anspruch 20, dadurch gekennzeichnet, daß die Erstreckungsrichtung des Düsenhalteelementes (90) zu einer Richtung eingestellt ist, welche nahezu dieselbe ist wie die Richtung der Abgasventil(35)mittellinie oder der Einlaßventil(36)mittellinie und die Erstrekkungsrichtung des Düsenhalteelementes (90) und die Erstreckungsrichtung der Einlaßröhre (86) voneinander in einer planen Ansicht abgelenkt sind.

22. Direkteinspritz-Dieselmotor gemäß Anspruch 20, dadurch gekennzeichnet, daß die Einlaßrohre (86) sich in einer Richtung vertikal zu der Erstreckungsrichtung der Zylinderbohrungsmittellinie (100) nahe der Kraftstoffeinspritzdüse (26) erstreckt.

## Revendications

1. Moteur diesel à injection directe comportant deux soupapes d'admission (36) et deux soupapes d'échappement (35) situées dans chaque cylindre (5), les deux soupapes d'admission (36) étant disposées en zigzag, de sorte que la ligne médiane des soupapes d'admission, qui est une ligne droite passant par le centre des deux soupapes d'admission (36) dans une vue en plan, et la ligne médiane des alésages de cylindre (100), qui est une ligne droite passant par le centre de chaque alésage de cylindre, peuvent s'intersecter à un angle d'inclinaison spécifique, et les deux soupapes d'échappement (35) étant disposées en zigzag, de sorte que la ligne médiane des soupapes d'échappement, qui est une ligne droite passant par le centre des deux soupapes d'échappement (35) dans une vue en plan, et la ligne médiane des alésages de cylindre (100), peuvent s'intersecter à un angle d'inclinaison spécifique, dans lequel
un arbre à cames (6), qui s'étend dans la direction de la ligne médiane des alésages de cylindre (100) et qui est tourné et entraîné par un arbre de sortie de moteur, est disposé à l'avant d'un bord périphérique de l'alésage de cylindre, quand on regarde dans la direction verticale à la ligne médiane des alésages de cylindre (100) dans une vue en plan,
les deux soupapes d'admission (36) sont ouvertes ou fermées par un culbuteur d'admission (19) qui est oscillé et actionné par une came d'admission (9) située sur l'arbre à cames (6), et les deux soupapes d'échappement (35) sont ouvertes ou fermées par un culbuteur d'échappement (16) qui est oscillé et actionné par une came d'échappement (8) située sur l'arbre à cames (6),
caractérisé en ce que
deux trous de boulon à tête (38) ne sont situés qu'à des positions à l'écart de l'alésage de cylindre, quand on regarde dans une direction de la ligne médiane des alésages de cylindre (100), des deux côtés de la ligne d'alésage de cylindre, de sorte que quatre trous de boulon à tête (38) sont disposés autour de chaque alésage de cylindre, et
en ce qu'un coussinet de came (10), destiné à supporter mobile en rotation l'arbre à cames, est disposé à une position correspondant au centre de l'alésage de cylindre quand on regarde dans la direction de la ligne médiane des alésages de cylindre (100).

2. Moteur diesel à injection directe selon la revendication 1, caractérisé en ce que
le culbuteur d'admission (19) et le culbuteur d'échappement (16) sont disposés parallèlement dans la direction de la ligne médiane des alésages de cylindre (100), et
en ce que le coussinet de came (10) est disposé entre le culbuteur d'admission (19) et le culbuteur d'échappement (16) quand on regarde dans la direction de la ligne médiane des alésages de cylindre (100) dans une vue en plan.

3. Moteur diesel à injection directe selon l'une des revendications précédentes, caractérisé en ce que
un organe de transmission (41) entraîné et couplé avec un arbre de sortie de moteur par l'intermédiaire d'un élément de transmission à enroulement est disposé à l'extrémité avant de l'arbre à cames (6),
en ce qu'un axe de culbuteur (15) destiné à supporter de façon oscillante le culbuteur d'admission (19) et le culbuteur d'échappement (16) s'étend et est disposé parallèlement à l'arbre à cames (6), à une position plus proche du centre de l'alésage de cylindre que l'arbre à cames (6) quand on regarde dans une direction verticale à la direction de la ligne médiane des alésages de cylindre (100) dans une vue en plan, et
en ce que le rapport de levier du culbuteur (16, 19) situé sur le côté avant, soit du culbuteur d'admission (19), soit du culbuteur d'échappement (16) correspondant à l'alésage de cylindre situé à la position la plus en avant, est fixé plus petit que le rapport de levier du culbuteur (16, 19) situé sur le côté arrière.

4. Moteur diesel à injection directe selon l'une des revendications précédentes, caractérisé en ce que le culbuteur d'admission (19) comprend une partie de butée (20) butant contre la came d'admission (9), et une partie de poussée (21), située à une position intermédiaire entre les deux centres des deux soupapes d'admission (36) dans une vue en plan, destinée à pousser les deux soupapes d'admission (36) à une même cadence, le culbuteur d'échappement (16) comprenant une partie de butée (17) butant contre la came d'échappement (8), et une partie de poussée (18), située à une position intermédiaire entre les deux centres des deux soupapes d'échappement (35) dans une vue en plan, destinée à pousser les deux soupapes d'échappement (35) à une même cadence, et la partie de poussée (18, 21) est déviée vers le côté du centre de l'alésage de cylindre par rapport à la partie de butée (17, 20) quand on regarde dans la direction de la ligne médiane des alésages de cylindre (100), dans au moins un des deux culbuteurs (16, 19).

5. Moteur diesel à injection directe selon la revendication 4, caractérisé en ce que la partie de poussée (21) est déviée vers le côté du centre de l'alésage de cylindre par rapport à la partie de butée (20) quand on regarde dans la direction de la ligne médiane des alésages de cylindre (100), seulement dans le culbuteur d'admission (19).

6. Moteur diesel à injection directe selon la revendication 4, caractérisé en ce que la partie de poussée (18, 21) est déviée vers le côté du centre de l'alésage de cylindre par rapport à la partie de butée (17, 20) quand on regarde dans la direction de la ligne médiane des alésages de cylindre (100), individuellement, dans les deux culbuteur d'admission (19) et culbuteur d'échappement (16), et
en ce que l'étendue de la déviation du culbuteur d'admission (19) est plus grande que l'étendue de la déviation du culbuteur d'échappement (16).

7. Moteur diesel à injection directe selon l'une des revendications 3 à 6, caractérisé en ce que l'arbre à cames (6) est situé à une position plus basse que l'axe de culbuteur (15).

8. Moteur diesel à injection directe selon l'une des revendications 4 à 7, caractérisé en ce que la longueur de bras de l'un ou l'autre culbuteur (16, 19) parmi le culbuteur d'admission (19) et le culbuteur d'échappement (16), qui a une plus petite étendue de déviation de la partie de poussée (18, 21) vers le côté du centre de l'alésage de cylindre par rapport à la partie de butée (17, 20) quand on regarde dans la direction de la ligne médiane des alésages de cylindre (100), est plus courte que la longueur de bras de l'autre culbuteur (16, 19).

9. Moteur diesel à injection directe selon l'une des revendications précédentes, caractérisé en ce que le diamètre de soupape de la soupape d'admission (36) est fixé plus grand que le diamètre de soupape de la soupape d'échappement (35).

10. Moteur diesel à injection directe selon l'une des revendications précédentes, caractérisé en ce que la longueur de bras du culbuteur d'admission (19) est plus longue que la longueur de bras du culbuteur d'échappement (16).

11. Moteur diesel à injection directe selon l'une des revendications précédentes, caractérisé en ce que le coussinet de came (10) comporte un chapeau de came (11) serré et fixé à la culasse (3).

12. Moteur diesel à injection directe selon l'une des revendications 3 à 11, caractérisé en ce que le rapport de levier du culbuteur d'échappement (16) est fixé plus petit que le rapport de levier du culbuteur d'admission (19).

13. Moteur diesel à injection directe selon la revendication 11 ou 12, caractérisé en ce que l'axe de culbuteur (15) est fixé au chapeau de came (11) en une seule pièce, par un serrage conjoint effectué par le boulon (12) serrant le chapeau de came (11), et en ce que le trou de boulon à tête (38) situé du côté de l'arbre à cames (6) par rapport à la ligne médiane des alésages de cylindre (100), en dehors des trous de boulon à tête (38), est disposé à une position chevauchant l'axe de culbuteur (15) dans une vue en plan.

14. Moteur diesel à injection directe selon l'une des revendications 3 à 13, caractérisé en ce que la partie d'extrémité avant de l'axe de culbuteur (15) est montée et fixée dans une direction de la ligne médiane des alésages de cylindre (100) par rapport à la partie de support prévue dans le coussinet de came (10) positionné au niveau de la partie d'extrémité avant du moteur.

15. Moteur diesel à injection directe selon l'une des revendications précédentes, caractérisé en ce qu'une partie en amont de chacune de deux lumières d'admission (34) est ouverte sur une première partie latérale d'une culasse (3), tandis qu'une partie en amont de chacune de deux lumières d'échappement (33) est ouverte sur une seconde partie latérale de la culasse (3), quand on regarde dans la direction verticale à la ligne médiane des alésages de cylindre (100) dans une vue en plan,
en ce qu'une ouverture sur une chambre de combustion (13) de la lumière d'admission (34) à distance de la première partie latérale de la culasse (3) et une ouverture sur la chambre de combustion (13) de la lumière d'échappement (33) à distance de la seconde partie latérale de la culasse (3) sont disposées sur une ligne diagonale d'un carré ayant chaque centre de quatre trous de boulon à tête (38) disposés autour de chaque alésage de cylindre comme sommets, et
en ce qu'une nervure (76) faisant saillie à l'intérieur d'une chemise d'eau (72) est située dans la paroi inférieure de la chemise d'eau (72), entre la lumière d'échappement (33), et le moyeu de boulon du trou de boulon à tête (38) adjacent à la lumière d'échappement (33) qui est positionné sur la ligne diagonale.

16. Moteur diesel à injection directe selon la revendication 15, caractérisé en ce que la paroi de la lumière d'admission (34) est couplée à la paroi supérieure de la chemise d'eau (72) au niveau du côté en amont selon la direction d'écoulement d'admission, et un espace est formé entre la partie de paroi de la lumière d'échappement (33) et la paroi supérieure de la chemise d'eau (72).

17. Moteur diesel à injection directe selon l'une des revendications précédentes, caractérisé en ce qu'une forure transversale (74) destinée à amener de l'eau de refroidissement d'une chemise d'eau (72) est prévue, s'étendant vers l'intérieur de la culasse (3), au moins depuis une partie latérale de la culasse (3) près d'une partie en amont de chacune des lumières d'échappement (33), en direction d'une position entre une ouverture d'une lumière d'échappement (33) et une ouverture d'une lumière d'admission (34), lesdites deux ouvertures étant disposées à proximité l'une de l'autre.

18. Moteur diesel à injection directe selon la revendication 17, caractérisé en ce que la forure transversale (74) est située seulement au niveau du côté d'échappement de la culasse (3).

19. Moteur diesel à injection directe selon l'une des revendications précédentes, caractérisé en ce qu'un injecteur de carburant (26) est disposé près du centre d'alésage de cylindre dans une vue en plan, et un élément de support d'injecteur (90), destiné à fixer l'injecteur de carburant (26), est disposé entre l'arbre de soupape d'admission (36) et l'arbre de soupape d'échappement (35) au niveau d'une certaine position sur le côté opposé de l'arbre à cames (6) par rapport à l'injecteur de carburant (26).

20. Moteur diesel à injection directe selon la revendication 19, caractérisé en ce qu'une conduite d'admission (86), destinée à amener le carburant à l'injecteur de carburant (26), est située au-dessus de l'élément de support d'injecteur (90).

21. Moteur diesel à injection directe selon la revendication 20, caractérisé en ce que la direction de l'élément de support d'injecteur (90) est déterminée comme étant une direction presque identique à la direction de ladite ligne médiane des soupapes d'échappement (35) ou de ladite ligne médiane des soupapes d'admission (36), et
en ce que la direction de l'élément de support d'injecteur (90) et la direction de la conduite d'admission (86) dévient l'une de l'autre dans une vue en plan.

22. Moteur diesel à injection directe selon la revendication 20, caractérisé en ce que la conduite d'admission (86) s'étend dans une direction verticale par rapport à la direction de la ligne médiane des alésages de cylindre (100) près de l'injecteur de carburant (26).
